# EUROPEAN PATENT APPLICATION

(11) **EP 3 407 570 A1**
(43) Date of publication of application: **28.11.2018**
(21) Application number: 18174159.6
(22) Date of filing: 24.05.2018
(51) Int. Cl.: H04L 29/08, H04L 29/06

(54) **EMPLOYING A DATA SERVER TO FACILITATE APPLICATION PORTABILITY**

(30) Priority: 26.05.2017 US 201715607394
(71) Applicant: GE Aviation Systems LLC, Grand Rapids, MI 49512-1991 (US)
(72) Inventor: OVENS, Norman Leonard, Grand Rapids, Michigan 49512-1991 (US); MCGOOKEY, Jeffrey Scott, Grand Rapids, Michigan 49512-1934 (US)
(74) Representative: Williams, Andrew Richard

(57) **Abstract**

Data traffic between applications 108, 110, 112 and between applications 108, 110, 112 and other components can be desirably adapted to facilitate communication of traffic between respective applications 108, 110, 112 and between applications 108, 110, 112 and other components. A data server 118 can collect respective data element characteristics and rate information associated with respective applications 108, 110, 112. The data server 118 can decode messages from applications 108, 110, 112 to identify the data in the messages and maintain a data element table 124 comprising the data. The data server 118 can generate messages comprising only data desired by an application 108 in a format associated with the application 108 and can convert data values to units employed by the application 108 based on data elements characteristics associated with the application 108, wherein respective messages can be sent to the respective applications 108, 110, 112. The data server 118 can isolate developed applications from other parts, including other applications, under development by performing data translation operations between developed applications and the other applications under development.

## Description

### TECHNICAL FIELD

This disclosure relates generally to data processing associated with applications, e.g., employing a data server to facilitate application portability.

### BACKGROUND

Some systems employing applications can provide a virtual environment for the applications to execute. Each application can receive predefined and fixed amounts of resources with regard to memory, processor throughput, and input/output bandwidth. A system may be able to communicate with external sensors through a data path that can allow data to flow between applications and the sensors.

The above-described description is merely intended to provide a contextual overview relating to systems employing applications and resources, and is not intended to be exhaustive.

### SUMMARY

The following presents a simplified summary of the specification in order to provide a basic understanding of some aspects of the specification. This summary is not an extensive overview of the specification. It is intended to neither identify key or critical elements of the specification, nor delineate any scope of the particular implementations of the specification or any scope of the claims. Its sole purpose is to present some concepts of the specification in a simplified form as a prelude to the more detailed description that is presented later.

In accordance with a non-limiting, example implementation, a method can comprise routing, by a system comprising a processor, a message, comprising data, being communicated in a network to a data server for processing, in response to determining that at least one of the message or the data is to be adapted based at least in part on data element characteristics and rate information associated with an application, wherein the data is a data type that is able to be utilized by the application and is maintained in a data table of the data server. The method also can comprise adapting, by the system, at least one of the message or the data, in accordance with the data element characteristics and the rate information associated with the application, to generate at least one of a modified message or modified data to be sent to the application.

In accordance with another non-limiting, example implementation, a system can comprise a memory that stores computer-executable components, and a processor that executes computer-executable components stored in the memory. The computer executable-components can include a data server that monitors data traffic communicated in a network in connection with applications associated with the network. The computer executable-components can comprise a data management component that directs a message, comprising data, being communicated as part of the data traffic in the network to the data server for processing, in response to the monitoring of the data traffic and a determination that at least one of the message or the data is to be adapted based at least in part on data element characteristics and rate information associated with an application of the applications, wherein the data is a data type that is able to be utilized by the application and is maintained in a data table of the data server, and wherein the data management component adapts at least one of the message or the data, in accordance with the data element characteristics and the rate information associated with the application, to generate at least one of a modified message or modified data to be sent to the application via a network component of the network.

In accordance with still another non-limiting, example implementation, a machine-readable medium can comprise executable instructions that, when executed by a processor, facilitate performance of operations. The operations can comprise routing a message, comprising data, communicated in a network to a data server for processing, in response to determining that at least one of the message or the data is to be modified based at least in part on data element characteristics and rate information associated with an application, wherein the data is a data type that is usable by the application and is maintained in a data table of the data server subsequent to receipt by the data server. The operations also can include modifying at least one of the message or the data, in accordance with the data element characteristics and the rate information associated with the application, to generate at least one of a modified message or modified data to be sent to the application.

The following description and the annexed drawings set forth certain illustrative aspects of the specification. These aspects are indicative, however, of but a few of the various ways in which the principles of the specification may be employed. Other advantages and novel features of the specification will become apparent from the following detailed description of the specification when considered in conjunction with the drawings.

### BRIEF DESCRIPTION OF THE DRAWINGS

Numerous aspects, implementations, objects and advantages of the present invention will be apparent upon consideration of the following detailed description, taken in conjunction with the accompanying drawings, in which like reference characters refer to like parts throughout, and in which:
FIG. 1 illustrates a block diagram of an example system that can desirably adapt data traffic between applications and between other components and applications to facilitate application portability and facilitate communication of traffic between respective applications and between the other components and applications, in accordance with one or more embodiments of the disclosed subject matter;
FIG. 2 presents a block diagram of another example system that can desirably adapt data traffic between applications and between other components and applications to facilitate application portability and facilitate communication of traffic between respective applications and between the other components and applications, in accordance with one or more embodiments of the disclosed subject matter;
FIG. 3 depicts a block diagram of an example system that can employ multiple data servers that can desirably adapt data traffic between applications and between other components and applications to facilitate application portability and facilitate communication of traffic between respective applications and between the other components and applications, in accordance with one or more embodiments of the disclosed subject matter;
FIG. 4 illustrates a block diagram of an example data management component, in accordance with one or more embodiments of the disclosed subject matter;
FIG. 5 illustrates a flow diagram of an example method for desirably adapting data traffic between applications and between other components and applications to facilitate application portability and facilitate communicating traffic between respective applications and between the other components and applications, in accordance with one or more embodiments of the disclosed subject matter;
FIG. 6 presents a flow diagram of an example method for decoding messages and associated data to facilitate adapting the messages and associated data, in accordance with one or more embodiments and aspects of the disclosed subject matter;
FIG. 7 depicts a flow diagram of an example method for adapting messages and data to be sent to an application, in accordance with one or more embodiments of the disclosed subject matter;
FIG. 8 is a schematic block diagram illustrating a suitable operating environment; and
FIG. 9 is a schematic block diagram of a sample-computing environment.

### DETAILED DESCRIPTION

Various aspects of this disclosure are now described with reference to the drawings, wherein like reference numerals are used to refer to like elements throughout. In the following description, for purposes of explanation, numerous specific details are set forth in order to provide a thorough understanding of one or more aspects. It should be understood, however, that certain aspects of this disclosure might be practiced without these specific details, or with other methods, components, materials, etc. In
other instances, well-known structures and devices are shown in block diagram form to facilitate describing one or more aspects.

Some systems, such as an integrated modular avionics (IMA) system, employing applications can provide a virtual environment for the applications to execute. Each application can receive certain defined and fixed amounts of resources with regard to memory, processor throughput, and input/output bandwidth. Characterizing applications (e.g., software applications) by the resources they desire (e.g., want or require) can enable applications to be developed, tested, and certified individually, and integrated with other applications to form a larger system. Providing dedicated resources for each application can enable multiple applications to reside on a single computing device, as desired, and can allow applications to be reused in different systems, as desired. A system also may be able to communicate with external sensors through a data path that can allow data to flow between applications and the sensors via a network component (e.g., a deterministic network).

In an IMA environment, applications (e.g., software applications) can be isolated from each other in terms of processing time and memory space because they are each running in their own virtual environment. The platform operating software can provide communication mechanisms that can enable communication between applications and with input/output (I/O) data concentrators. In conventional systems, the platform communication mechanisms do not provide a definition of the messages used in the IMA environment. Instead, each application can define a unique set of messages. The applications within a system can be coded to understand the message formats used by other applications and the I/O data concentrators.

Different applications can have different messaging formats, can use different units of measurement, can have different data rates (e.g., for producing data or for consuming data), and/or can have other types of characteristics that are different between applications. Conventionally, each application defines a set of messages that is unique to that application, and the platform communication mechanisms of the system (e.g., IMA system) do not provide a definition of the messages used in the system environment (e.g., the IMA environment).

Also, conventionally, in certain industries, such as the avionics industry, to enable different applications to communicate with each other, a person (e.g., a system integrator) typically has to go to the respective entities (e.g., companies, software developers) producing the respective applications and get them to structure or modify their respective applications so that their applications can properly communicate with other different applications. The applications within the system are coded by the application software developers to understand the message formats used by other applications and other system components, such as I/O data concentrators. This can be undesirably inefficient, time consuming, and/or expensive (e.g., sometimes costing millions of dollars).

Further, if one of the applications in the system is modified or is replaced with a different application, the other applications in the system typically have to be modified, for example, by having the respective application software developers modify the code of the respective applications to understand the message formats used by the modified application or different application. This also can be undesirably inefficient, time consuming, and/or expensive.

The disclosed subject matter can employ techniques to desirably adapt data traffic between applications and between other components and applications to facilitate communication of traffic between respective applications and between applications and other components, in accordance with one or more embodiments of the disclosed subject matter. The disclosed subject matter can comprise a data server that can employ such techniques to facilitate enabling portability of applications by providing each application with its desired messages and data formats. The data server can isolate applications from interface changes, wherein the data server can customize message traffic between applications and between the I/O data concentrators and the applications. For instance, the data server can employ message and data translation techniques to facilitate enabling application software portability by mitigating (e.g., eliminating or at least significantly reducing) changes to I/O data element formatting portions and/or other portions of applications. The disclosed techniques can allow applications, which have been used in one system, to be used (e.g., reused) in another system without having to change the applications because the changes related to I/O can be managed by a data server employing the disclosed techniques. The I/O changes that can be managed by the data server can include formatting of data elements, scaling of data, creation of messages, and/or emulation of subsystems (e.g., relatively complex subsystems).

The data server can comprise a data management component that can collect respective data element characteristics and rate information associated with respective applications, and can store the respective data element characteristics and the rate information in a data store. The data management component also can monitor and receive data being communicated in the communication network, including data being generated and output by applications, data received from sensor components (e.g., sensors), and/or other components of the system. The data management component can decode messages from applications to identify the data in the messages based at least in part on the respective data element characteristics and rate information associated with the respective applications. The data management component can store the data values in a data store and can maintain, in the data store, a data table comprising current data values and other relevant data values associated with the system.

The data management component can determine when to generate and send a message to an application based at least in part on information received from the application (or another source) that indicates when data is desired, a request for data from the application, and/or the rate information associated with the application. The data management component can format (e.g., re-format) the message and/or the data in the message, in accordance with the data element characteristics and/or rate information associated with the application. The data management component also can convert data, for example, by converting a data value in a first type of unit (e.g., as produced by another application that produced the data) to a modified data value in a second type of unit based at least in part on the data element characteristics of the application.

In some embodiments, the data management component can tailor the message to include only the data desired by the application, without including other available data that the application does not desire (e.g., does not need). The data management component can communicate (e.g., transmit) the message (e.g., in the desired format, with data in the desired units, and with only the desired data) to the application (e.g., in real time).

For instance, the data management component can receive data from applications, sensor components, or other data sources, process (e.g., re-format, convert) the data, generate messages comprising data (e.g., in the desired format, using the desired data conversion) to be sent to receiving applications, and communicate the messages to the receiving applications in real time or substantially in real time at relatively fast network communication speeds without adding, or at least without substantially adding, latency or jitter to the communication of the data of such messages.

In some embodiments, the data management component can isolate developed applications from other parts, including other applications, of the system that are under development by performing data translation operations between developed applications and the other applications that are still under development. For instance, during system development (e.g., IMA system development), when applications complete testing and integration into the system, the data management component can be employed to isolate the developed (e.g., completed) applications from other applications and other parts of the system that are still under development. The data management component can accomplish such isolation by having the data server maintain fixed interfaces to the developed applications by performing I/O translation operations between the developed applications and the other applications still under development. This can facilitate reducing or limiting changes within the system.

These and other aspects and embodiments of the disclosed subject matter are described with regard to the figures.

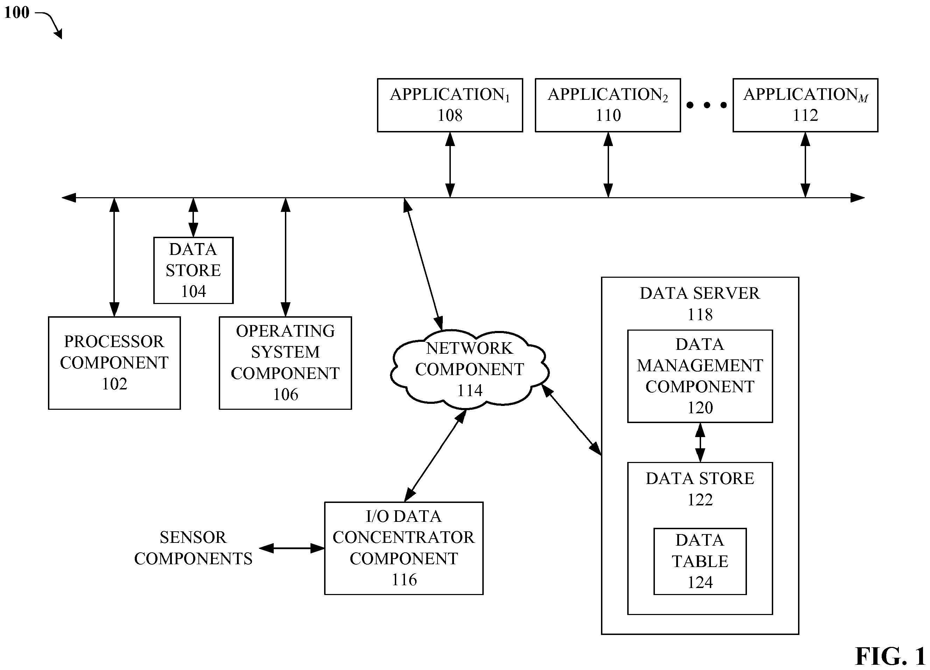

FIG. 1 illustrates a block diagram of an example system 100 that can desirably adapt data traffic between applications and between other components and applications to facilitate application portability and facilitate communication of traffic between respective applications and between the other components and applications, in accordance with one or more embodiments of the disclosed subject matter. Generally, systems (e.g., system 100) detailed herein can comprise one or more processors and one or more memories (e.g., one or more data stores) that can store executable instructions.

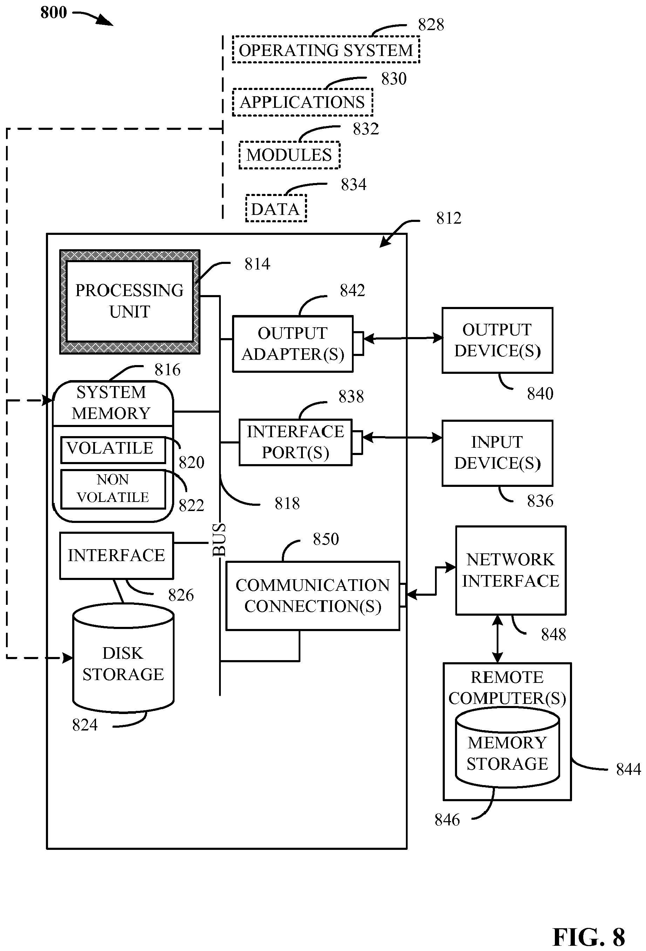

The instructions, when executed by a processor of the one or more processor, can facilitate performance of operations detailed herein. Examples of the one or more memories and one or more processors can be found with reference to FIG. 8. It is to be appreciated that the computer 812 can represent a suitable computing device that can be used in connection with implementing one or more of the systems or components shown and described in connection with FIG. 1 and other figures disclosed herein and/or the systems or components disclosed herein can comprise the computer 812. Moreover, systems detailed herein or components thereof can be employed to use hardware and/or software to solve problems that are highly technical in nature (e.g., related to vehicles (e.g., aircraft, ship, train, automobile, ...), power plants (e.g., nuclear or other types of power plants), medical systems, etc., that are not abstract and that cannot be performed as a set of mental acts by a human. For example, in some embodiments, certain determinations performed by components detailed herein can be based on very large data sets that mental acts by a human cannot solve sufficiently quickly to be as useful as otherwise. Furthermore, in some embodiments, certain solutions or determinations of components detailed herein can provide significant improvements to certain technological fields or domains such as technological domains relating to vehicles, power plants, medical systems, etc.

In some embodiments, the system can comprise a processor component 102 that can comprise processing hardware that can facilitate performing operations on and/or otherwise process data. The processor component 102 can work in conjunction with the other components of or associated with the system 100 to facilitate performing the various functions, operations, tasks, and/or activities of the system 100. The processor component 102 can employ one or more processors, microprocessors, or controllers that can process data, such as information relating to applications, sensors, resources, and/or other information, to facilitate operation of the system 100, as more fully disclosed herein, and can control data flow between various components of the system 100 and between the system 100 and other components associated with the system 100.

The system 100 also can include a data store 104 that can store data structures (e.g., user data, metadata), code structure(s) (e.g., modules, objects, hashes, classes, procedures) or instructions, information relating to applications, sensors, resources, and/or other information, to facilitate controlling operations associated with the system 100. In an aspect, the processor component 102 can be functionally coupled (e.g., through a memory bus) to the data store 104 in order to store and retrieve information desired to operate and/or confer functionality, at least in part, to various components of the system 100 and/or substantially any other operational aspects of the system 100.

The system 100 can receive data from one or more devices, components (e.g., sensor components comprising sensors), or other systems. Using the processor component 102 and other resources of the system 100, the system 100 can process data, as more fully disclosed herein, and can provide (e.g., transmit) the processed data to one or more applications, devices, components, or other systems, which can be the same as or different from the application(s), device(s), component(s), or other system(s) that provided the data used to generate the processed data, and/or the system 100 can store the processed data in the data store 104 or another data store(s) of the system 100. The system 100 can relate to and be employed to facilitate operation of, for example, vehicles (e.g., aircraft, ship, train, automobile, ...), power plants (e.g., nuclear or other types of power plants), medical systems, or other types of systems or devices.

In some embodiments, the system 100 can comprise an operating system component 106 that can employ one or more operating systems that can facilitate managing hardware and/or software resources (e.g., applications) of the system 100 and/or peripheral (e.g., peripheral hardware and/or software) resources associated with the system 100. The operating system component 106 can be associated with (e.g., connected to) the processor component 102, the data store 104, and/or other components of the system 100.

The system 100 also can comprise a set of applications, including, for example, application1 108, application2 110, up through applicationM 112, that can perform various respective functions on (e.g., to process) data or with regard to data, wherein M can be virtually any desired number. The respective applications (e.g., 108, 110, 112, ...) can be associated with the processor component 102, data store 104, and/or the operating system component 106. Respective applications of the set of applications (e.g., 108, 110, 112, ...) can comprise respective features, which can be based at least in part on respective programs (e.g., application or software programs), to perform various respective functions, operations, tasks, or activities. The respective applications can process data, perform calculations on data, render determinations, encrypt or decrypt data, compress or decompress data, present data, determine or identify a location, travel route (e.g., primary travel route and/or alternate travel route(s)), time (e.g., estimated time) to destination, and/or overall travel time associated with a vehicle (e.g., aircraft, ship, train, automobile, ...), determine (e.g., calculate) or identify peak, mean, and/or average values of certain data, process video content, process audio content, perform object, character, and/or voice or speech recognition in content (e.g., video and/or audio content), facilitate transmitting data, facilitate receiving data, etc. In accordance with various embodiments, the respective applications (e.g., 108, 110, 112, ...) can relate to and be employed to facilitate operation of vehicles, power plants, medical systems, and/or other types of devices or systems.

For example, a first application (e.g., application1 108) can facilitate performing location and travel related operations and tasks on data. The first application can perform operations or tasks on data to facilitate determining or identifying a location, travel route, time to destination, and/or overall travel time associated with a vehicle (e.g., aircraft, ship, train, automobile, ...). As another example, a second application (e.g., application2 110) can facilitate performing vehicle related operations or tasks on data. The second application can perform operations or tasks on data to facilitate determining or identifying a speed, altitude, fuel level, and/or engine(s) parameters (e.g., engine temperature, revolutions per minute (RPMs) of an engine) of the vehicle.

The system 100 also can include a network component 114 that can be associated with (e.g., communicatively connected to) various components (e.g., processor component, applications, I/O data concentrator component(s), ...) of the system 100 to facilitate communication of information between the various components of the system 100. The network component 114 can employ communication algorithms and protocols to facilitate the communication and/or routing of data to or from the network component 114 and through the network component 114. The network component 114 also can comprise desired components, such as routers, nodes (e.g., service nodes, gateway nodes), switches, interfaces, controllers, etc., that can facilitate communication of data between the various components of system 100 associated with the network component 114 in the communication network environment. The network component 114 can facilitate communicating information at desirably fast speeds to enable real-time operation, or substantially real-time operation, of the system 100.

In certain embodiments, the system 100 can comprise one or more I/O data concentrators, such as I/O data concentrator component 116, that can receive data (e.g., sensor data) from one or more sensor components or other data sources, process such data, and/or generate messages comprising desired portions of such data. The I/O data concentrator component 116 can generate messages comprising desired data (e.g., a desired portion of the sensor data) in accordance with a defined message format and/or protocol. The I/O data concentrator component 116 can facilitate communicating messages, comprising desired data, to a desired destination (e.g., component of system 100) via the network component 114.

In some embodiments, the system 100 can comprise a data server 118 that can desirably adapt data traffic between respective applications (e.g., 108, 110, and/or 112, ...) and between another component(s) (e.g., I/O data concentrator component 116) and an application(s) to facilitate communication of traffic between respective applications and between another component(s) and an application(s). The data server 118 can facilitate enabling portability of applications (e.g., 108, 110, 112, ...) by providing each application with its desired messages in accordance with the message and data formats of the application. The data server 118 can isolate applications (e.g., 108, 110, 112, ... ) from interface changes, wherein the data server 118 can customize (e.g., adapt, convert, translate, and/or tailor) message traffic between respective applications (e.g., between applications 108, 110, and/or 112, ...) and between an I/O data concentrator component(s) 116 and the applications (e.g., 108, 110, 112, ...). For instance, the data server 118 can employ message and data translation techniques to facilitate enabling application software portability by mitigating (e.g., eliminating or at least significantly reducing) changes to I/O data element formatting portions and/or other portions of the applications. The data server 118, by employing the disclosed techniques, can allow applications, which have been used in one system, to be used (e.g., reused) in another system without having to change the applications because the changes related to I/O can be managed by the data server 118 employing the disclosed techniques. The I/O changes that can be managed by the data server 118 can include, for example, formatting of data elements, scaling of data, creation of messages, and/or emulation of subsystems (e.g., relatively complex subsystems).

The data server 118 can comprise a data management component 120 that can collect respective data element characteristics and rate information associated with respective applications (e.g., 108, 110, 112, ...) and/or other components (e.g., I/O data concentrator component(s) 116), and can store the respective data element characteristics and the rate information of the respective applications and/or other components in a data store 122 of or associated with the data server 118. The data management component 120 can receive the respective data element characteristics and rate information from the respective applications and/or other components, or from another data source (e.g., from the application software providers via a source other than the applications themselves). For example, with respect to each application, there can be a configuration file that can comprise data element characteristics, rate information, and/or other information that can identify the message and/or data format to be used to format messages and/or data being communicated to the application and, accordingly, the message and/or data format the application uses when communicating messages and data, identify data parameter characteristics (e.g., units of measurement for data parameters) utilized by the application, identify types of data that the application desires to receive, rate information (e.g., a rate that the application desires to receive particular data), a language to utilize for data, etc. The data management component 120 can receive the respective configuration files of the respective applications (e.g., 108, 110, 112, ...) and/or other components from the respective applications, respective other components (e.g., I/O data concentrator component(s) 116), and/or another data source.

As an example, a first application (e.g., application1 108) can comprise a first set of data element characteristics (e.g., first message and/or data format, first set of units of measurement, first set of data types desired by the first application, ...), first rate information (e.g., relating to respective rates that respective types of data is desired to be received by the first application), and/or a first interface (e.g., with the network 114 and associated components) that can be unique to the first application. A second application (e.g., application2 110) can comprise a second set of data element characteristics (e.g., second message and/or data format, second set of units of measurement, second set of data types desired by the second application, ...), second rate information (e.g., relating to respective rates that respective types of data is desired to be received by the second application), and/or a second interface (e.g., with the network 114 and associated components) that can be unique to the second application. A third application (e.g., applicationM 112) can comprise a third set of data element characteristics (e.g., third message and/or data format, third set of units of measurement, third set of data types desired by the third application, ...), third rate information (e.g., relating to respective rates that respective types of data is desired to be received by the third application), and/or a third interface (e.g., with the network 114 and associated components) that can be unique to the third application.

The data management component 120 can monitor data and/or associated information (e.g., metadata) being communicated in the communication network via the network component 114, including data being generated and output by applications (e.g., 108, 110, 112, ...), data received from sensor components (e.g., sensors) via the I/O data concentrator component(s) 116, and/or data generated and output by other components (e.g., processor component 102) of the system 100. The data management component 120 can receive (e.g., obtain, capture) desired items of data being communicated via the network component 114. For instance, based at least in part on the monitoring of message traffic being communicated via the network component 114 and the respective data element characteristics and/or respective rate information of the respective applications or other components (e.g., I/O data concentrator component(s) 116), the data management component 120 can identify messages and data for which processing by the data server 118 can be desirable (e.g., to re-format, translate, convert, tailor, and/or otherwise process data). The data management component 120 can capture such messages and data and/or route such messages and data to the data server 118 for processing and/or can store such messages and data in the data store 122.

In some embodiments, the data management component 120 can decode messages from applications (e.g., 108, 110, 112, ...) or other components (e.g., I/O data concentrator component(s) 116) to identify the data contained in the messages based at least in part on the respective data element characteristics and rate information associated with the respective applications or respective other components that communicated the messages and/or produced the data. The data management component 120 can store the data (e.g., data values) in the data store 122 and can maintain, in the data store 122, a data table 124 comprising current data (e.g., current data values) and other relevant data associated with the system 100.

The data management component 120 also can determine when to generate and send a message, comprising desired data, to an application (e.g., 108) based at least in part on information received from the application (or another source) that can indicate when and/or what data is desired by the application, a request for data received from the application via the network component 114, and/or the rate information associated with the application. The data management component 120 can identify certain data (e.g., desired data) stored in the data store 122 (e.g., in the data table 124) or received in another message that is to be sent to the application (e.g., 108) based at least in part on the information received from the application (or another source), the request for data, and/or the rate information associated with the application. In certain embodiments, the data management component 122 can tailor the message to include only the data desired by the application (e.g., 108), without including other available data (e.g., stored in the data store 122) that the application does not desire (e.g., does not need or at least does not need at that time), based at least in part on the information received from the application (or another source), the request for data, and/or the data element characteristics and/or rate information associated with the application.

For example, an application (e.g., 108) can desire data relating to altitude and speed of an aircraft, but does not desire data relating to temperature and air pressure level in the cabin of the aircraft. Based at least in part on the information received from the application (or another source), the request for data, and/or the data element characteristics and/or rate information associated with the application, the data management component 120 can recognize (e.g., know) that the application desires data relating to the altitude and speed of an aircraft, but does not desire data relating to the temperature and air pressure level in the cabin of the aircraft. The data management component 120 can retrieve the desired data relating to the altitude and speed of an aircraft from the data store 122 (or another source), without retrieving the data relating to the temperature and air pressure level in the cabin of the aircraft (or other data not desired by the application).

As another example, an application (e.g., 108) can desire data relating to air temperature, wherein the data element characteristics associated with the application indicate that the application only has to have the current air temperature every five seconds. A particular sensor component, which can detect the air temperature, can generate air temperature data at a rate of every 100 milliseconds, which can be provided to the network component 114 via the I/O data concentrator component 116. The data management component 120 can know that the application desires air temperature data at a rate of every five seconds based at least in part on the data element characteristics associated with the application. As a result, the data management component 120 can generate messages, which include the current air temperature data, and send such messages to the application (e.g., 108) via the network component 114 every five seconds. In some embodiments, the data management component 120 can decide to only capture the air temperature data every five seconds for processing (e.g., reformatting, and/or conversion, ...) and sending to the application. In other embodiments, the data management component 120 can decide to capture all or a desired portion of the air temperature data at a higher rate than every five seconds, and can store such air temperature data in the data table 124 in the data store 122, as, for example, another application (e.g., 112) also may desire air temperature data, but desires air temperature data at a different rate than the application (e.g., 108). Thus, with respect to the data producer (e.g., the sensor component) and the data consumer (e.g., the application (e.g., 108)), the data management component 120 can downrate communication of the air temperature data from a rate of every 100 milliseconds to a rate of every five seconds, in accordance with the rate information associated with the application (e.g., 108).

Thus, the data server 118, employing the data management component 120, can provide message traffic containing only the data (e.g., data elements) desired (e.g., wanted or needed) by the respective applications (e.g., 108, 110, 112, ...). This can eliminate or at least significantly reduce undesired or unused information from being transmitted in the network of the system 100. The data management component 120 can have knowledge of the network topology of the system 100 and where the applications respectively reside therein or in relation thereto, which can enable the data server 118, including the data management component 120, to be configured to only send the desired data to each section of the network and to each application in the system 100. This enhancement (e.g., optimization and/or improvement) of message traffic communications by the data server 118 can reduce network utilization, and in particular, reduce undesired (e.g., unnecessary) network utilization, which can enable more message traffic (e.g., desired message traffic) to be on the network.

The data management component 120 can format (e.g., re-format) the message and/or the data in the message based at least in part on an appropriate message and/or data format, in accordance with the data element characteristics and/or rate information associated with the application (e.g., 108). In some embodiments, during decoding of a message from which an item of data was obtained, the data management component 120 can decode or de-format the item of data, and can store the decoded or de-formatted data in the data store 122 (e.g., in the data table 124) in an agnostic format or a desired format of the data server 118. In other embodiments, if the item of data was stored in the data store 122 in a format employed by the application or other component that communicated or produced the item of data, which was captured by or routed to the data server 118, the data management component 120 can retrieve the item of data from the data store 122 and de-format the item of data from that format associated with the sender or producer of the item of data. The data management component 120 format (e.g., re-format) the message and/or the data in the message based at least in part on an appropriate message and/or data format to be utilized with respect to the application (e.g., 108) that is to receive the message and data from the data server 118, in accordance with the data element characteristics and/or rate information associated with the application (e.g., 108).

In some embodiments, the data management component 120 can convert or scale data, for example, by converting or scaling a data value in a first type of unit (e.g., as produced by another application (e.g., 110) or other component (e.g., sensor component or I/O data concentrator component 116) that produced the data) to a modified data value in a second type of unit that is desired with respect to the application (e.g., 108) that is to receive the data, based at least in part on the data element characteristics of the application (e.g., 108). For example, a first application (e.g., 108) can desire and utilize a data parameter (e.g., make determinations based on the data parameter) in a first type of unit of measurement (e.g., feet), whereas a second application (e.g., 110) can generate and communicate the data parameter in a second type of unit of measurement (e.g., meters). When the data server 118 captures or receives the message, comprising the data parameter, sent by the second application (e.g., 110), the data management component 120 can determine that the data parameter is in the second type of unit of measurement based at least in part on the data element characteristics of the second application (e.g., 110) and/or information contained in the message that indicates the data parameter is in the second type of unit of measurement. The data management component 120 can store the data parameter in the data table 124 in the data store 122 in the second type of unit of measurement. When the data management component 120 is generating a message, which is to include the data parameter and is to be sent to the first application (e.g., 108), the data management component 120 can identify that the data parameter is to be in the first type of unit of measurement based at least in part on the data element characteristics of the first application (e.g., 108). The data management component 120 can convert or scale the data parameter from the second type of unit of measurement (e.g., meters) to generate a modified data parameter that can be in the first type of unit of measurement (e.g., feet) associated with the first application (e.g., 108). The data management component 120 can insert the modified data parameter in the message and can send the message to the first application (e.g., 108).

The first application (e.g., 108) can receive the data parameter, which can already be in the desired first type of unit of measurement (e.g., feet). As a result, the first application (e.g., 108) does not have to perform any conversion or scaling of the data parameter.

With the data management component 120 managing the conversions or scaling of data values, in accordance with the respective data element characteristics of the respective applications (e.g., 108, 110, 112, ...), the applications can use less processing time to decode data (e.g., I/O data).

It is to be appreciated and understood that, in some instances, an application (e.g., 108) can desire various types of data, which can be provided by various different data sources. The various data sources, such as other applications (e.g., 110, and/or 112, ... ), the sensor components (e.g., via the I/O data concentrator component(s) 116), or other components, can communicate the various types of data in the network via the network component 114. The data management component 120 can monitor and/or detect the various types of data, as well as other data, being communicated in the network. The data management component 120 can capture a desired portion of such data and/or can route the desired portion of such data to the data server 118, based at least in part on determining that the desired portion of such data is to be processed to adapt such data, based at least in part on the data element characteristics and/or rate information associated with the application (e.g., 108). With regard to the various types of data captured by or routed to the data server 118, the data management component 120 can store the various types of data and/or related information (e.g., metadata) in the data table 124 in the data store 122. The related information, such as metadata, can comprise information relating to a source of the data (e.g., a source identifier that can identify the application, sensor component, or other component that produced the associated data), a time (e.g., via a timestamp or other time identifier) the data was captured or generated, a destination of the data (e.g., a destination identifier that can identify an application or other component to which the data is to be delivered), a type of unit of measurement (e.g., feet, or meters, ... ; degrees Fahrenheit, or degrees Celsius, ... ; milliseconds, seconds, minutes, or hours, ... ; and so on) of the associated data, a type of data (e.g., a sampled data value, average value, mean value, or peak value, ...), instructions regarding how to treat or process the message or included data, instructions regarding how the message or included data has been formatted, and/or other information.

From the data stored in the data table 124, the data management component 120 can identify the various types of data (from the various different data sources) desired by the application (e.g., 108), based at least in part on the data element characteristics and rate information associated with the application. For example, at a particular time, the application (e.g., 108) can desire a first data parameter that is produced by a first sensor component, a second data parameter that is produced by a second sensor component, and a third data parameter that is produced by another application (e.g., 110). The data management component 120 can identify the first data parameter, the second data parameter, and the third data parameter, which were obtained from the respective data sources, in the data table 124, can retrieve the first data parameter, second data parameter, and third data parameter from the data table 124, and can generate a message, comprising such data parameters. The data management component 120 can process (e.g., format, and/or convert, ...) the message and such data parameters, in accordance with the data element characteristics associated with the application (e.g., 108). The data management component 120 can transmit the message, comprising the first, second, and third data parameters, to the application (e.g., 108) via the network component 114.

In certain embodiments, the data management component 120 can capture certain messages and data or route such messages and data to the data server 118 for processing (e.g., adapting), process the data, generate messages comprising desired data, and communicate (e.g., transmit) the messages (e.g., in a desired format, with data in the desired units, and with only the desired data) to a receiving application (e.g., 108, 110, 112, ...) via the network component 114 in real time or at least in substantially near real time. For instance, the data management component 120 can receive messages and data from applications (e.g., 108, 110, and/or 112, ...), sensor components, I/O data concentrator component(s) 116, or other data sources, process (e.g., re-format, convert, translate, and/or tailor) the data, generate messages comprising desired data (e.g., in the desired format, using the desired units) to be sent to receiving applications, and communicate the messages to the receiving applications in real time or substantially in real time at relatively fast network communication speeds without adding, or at least without substantially adding, latency or jitter to the communication of such messages.

For example, a message(s) comprising data that can be utilized by an application can be communicated in the network via the network component 114. The message(s) and associated data can be generated and communicated via the network component 114 by another application(s) and/or an I/O data concentrator component(s) 116 (e.g., based on sensor data received by the I/O data concentrator component(s) 116 from a sensor component(s)). The data management component 120 can route the message(s) and associated data to the data server 118, process (e.g., adapt, format, convert, scale, and/or translate, ...) the message(s) and data to generate a modified message and/or modified data (e.g., based at least in part on the data element characteristics and/or rate information associated with the application), and communicate the modified message and/or modified data to the application at a desirably fast network speed that can satisfy one or more defined jitter parameters and one or more defined latency parameters associated with the data, the application, and/or the network component 114, in accordance with defined data management criteria. The satisfying of the one or more defined jitter parameters and the one or more defined latency parameters can indicate that the routing of the message(s) and data, the processing of the message(s) and data, and the communicating of the modified message and/or modified data by the data management component 120 is suitable (e.g., acceptable and/or optimal) and at least satisfies a defined minimum threshold(s) data communication rate associated with the network component 114 relating to communicating information via the network component 114.

In some instances, a portion of a system, such as a particular application or other component, may be under development and undergoing changes in configuration as it is being developed. For instance, an application can be operational and usable to at least a certain degree within the system. The application can be incorporated into the system, but can continue to undergo changes in configuration as the application is being further developed towards attaining a defined developed application status (e.g., a developed or completed application status, wherein no further modifications or minimal additional modifications will be made to the application).

In a conventional system, having applications or other components that are still undergoing development within the system can be problematic, as the developed applications typically will have to be modified by the application software developers to change the coding each time the configuration of another application or component that is still under development is changed. This can be undesirably inefficient, time consuming, and/or expensive (e.g., sometimes costing millions of dollars).

The disclosed subject matter, by employing the data server 118, can overcome these and other issues associated with conventional systems. In some embodiments, the data server 118, employing the data management component 120, can isolate developed applications from other parts, including other applications, of the system 100 that are under development by performing data translation operations between developed applications and the other applications that are still under development. For instance, during system development (e.g., IMA system development), when applications complete testing and integration into the system 100, the data management component 120 can be employed to isolate the developed (e.g., completed) applications from other applications and other parts of the system 100 that are still under development. The data management component 120 can accomplish such isolation by having the data server 118 maintain fixed interfaces to the developed applications by performing I/O translation operations (e.g., data translation operations, such as message formatting, conversion or scaling of data values, ...) between the developed applications and the other applications still under development and between other components of the system 100 and the other applications still under development. This can facilitate reducing or limiting changes within the system 100, including reducing, minimizing, or eliminating having to make changes to completed applications in response to changes (e.g., changes in configuration) made to an application or other component that is under development.

For example, during a first period of time, assume that a first application (e.g., 108) and second application (e.g., 110) are developed applications in the system 100, whereas a third application (e.g., 112) is still under development, wherein changes may be made to the third application over time. The data management component 120 can maintain fixed interfaces with the first application (e.g., 108) and second application (e.g., 110), since they are developed applications. During the first time period, the third application (e.g., 112) can have a first set of data element characteristics, first rate information, and/or a first interface with the network and associated components. Since the data management component 120 can manage the data translation operations (e.g., message formatting, conversion or scaling of data values, ...) between respective applications and between applications and other components of the system 100, even though the third application (e.g., 112) is still under development, no changes have to be made to the coding of the first application (e.g., 108) or second application (e.g., 110) to account for the current configuration (e.g., first set of data element characteristics, first rate information, and/or first interface) of the third application (e.g., 112).

During a second time period, the third application (e.g., 112), as it is being further developed, can be modified to have a second set of data element characteristics, second rate information, and/or a second interface with the network and associated components that is different from the first set of data element characteristics, first rate information, and/or first interface. Again, since the data management component 120 can manage the data translation operations between respective applications and between applications and other components of the system 100, even though the third application (e.g., 112) is still under development and has been modified from how it was configured during the first time period, no changes have to be made to the coding of the first application (e.g., 108) or second application (e.g., 110) to account for the current configuration (e.g., second set of data element characteristics, second rate information, and/or second interface) of the third application (e.g., 112). For instance, the data server 118, including the data management component 120, can be modified (e.g., updated) to account for the changes made to the third application (e.g., 112) to enable the data management component 120 to process messages and data associated with the third application (e.g., messages or data received from or being communicated to the third application) and/or communicate with the third application, in accordance with the second set of data element characteristics, second rate information, and/or second interface. The data server 118 can thereby isolate the first application (e.g., 108), second application (e.g., 110), and/or other components of the system 100 from the third application (e.g., 112), including changes made to the third application as it undergoes development.

It is to be appreciated and understood that, while the data server 118 is depicted as being a component separate from other components of the system 100, in other embodiments, all or a portion of the data server 118 can be part of one or more other components, such as, for example, the network component 114, an I/O data concentrator component 116, and/or another component of the system 100. Also, it is to be appreciated and understood that, while the system 100 comprises one data server 118, in other embodiments, there can be more than one data server (and more than one data management component therein), wherein a desired number of data servers can be distributed throughout the system and can share the load of capturing or receiving data, processing messages and data, sending data to applications, etc., in connection with the applications of the system, as more fully described herein.

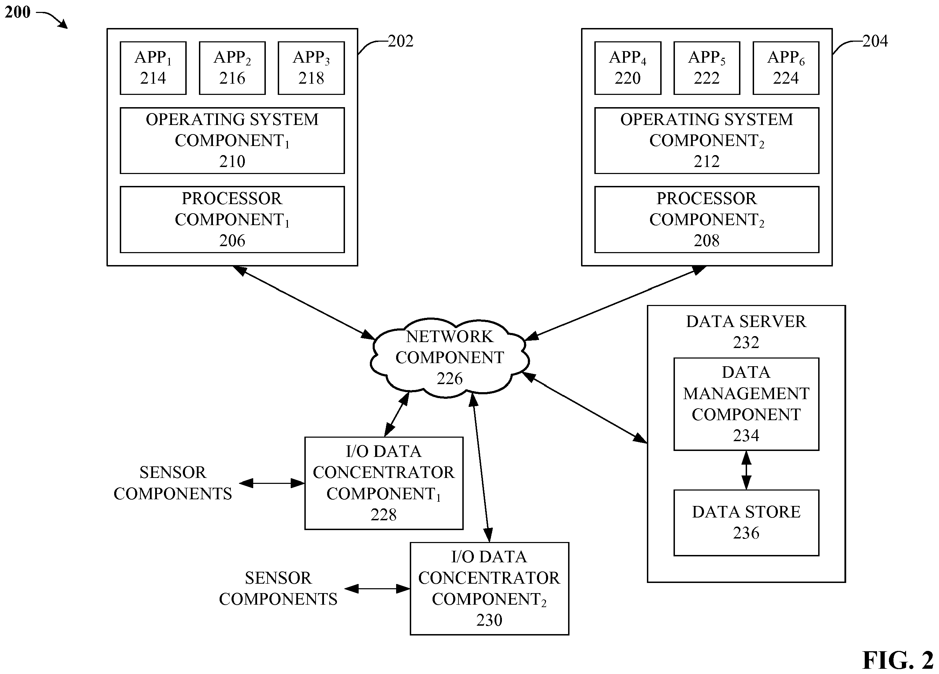

Referring to FIG. 2, FIG. 2 presents a block diagram of another example system 200 that can desirably adapt data traffic between applications and between other components and applications to facilitate application portability and facilitate communication of traffic between respective applications and between the other components and applications, in accordance with one or more embodiments of the disclosed subject matter. The system can comprise a processing subsystem1 202 and processing subsystem2 204 that respectively can provide processing resources and host multiple applications.

The system 200 can comprise processor components, including processor component 1 206 and processor component2 208, that each can comprise processing hardware that can facilitate performing operations on data and/or otherwise process data, as more fully disclosed herein. Processor component1 206 can be part of processing subsystem1 202, and processor component2 208 can be part of processing subsystem2 204.

The system 200 also can comprise operating system components (e.g., platform operating software), such as operating system component1 210 and operating system component2 212, that respectively can employ one or more operating systems that can facilitate managing hardware and/or software resources (e.g., applications) of the system 200 and/or peripheral (e.g., peripheral hardware and/or software) resources associated with the system 200, as more fully disclosed herein. Operating system component1 210 can be part of processing subsystem1 202 and associated with (e.g., connected to and work in conjunction with) processor component1 206, and operating system component2 212 can be part of processing subsystem2 204 and associated with processor component2 208, for example.

The system 200 further can include a desired number of applications, comprising, for example, application1 214 (APP1 214), application2 216 (APP2 216), application3 218 (APP3 218), application4 220 (APP4 220), application5 222 (APP5 222), and application6 224 (APP6 224), wherein respective applications can have respective features, which can be based at least in part on respective programs (e.g., application or software programs), to perform various respective functions, operations, tasks, or activities on or in connection with data, as more fully disclosed herein. The respective applications can comprise respective data element characteristics, respective rate information, and/or other respective features, as more fully disclosed herein. A first portion of the applications (e.g., application1 210, application2 212, application3 214) can be part of processing subsystem1 202 and associated with operating system component1 206 and processor component1 202. A second portion of the applications (e.g., application4 216, application5 218, and application6 220) can be part of processing subsystem2 204 and associated with operating system component2 208 and processor component2 204.

The system 200 can comprise a network component 226 that can be associated with (e.g., communicatively connected to) various components (e.g., processor components, applications, I/O data concentrator components, ...) of the system 200 to facilitate communication of information between the various components of the system 200. In some embodiments, the network component 226 can be or can comprise a deterministic network. The network component 226 can employ communication algorithms and protocols to facilitate the communication and/or routing of data to or from the network component 226 and through the network component 226. The network component 226 can facilitate communicating data (e.g., messages comprising data) at desirably fast speeds to enable real-time operation, or substantially real-time operation, of the system 200. The network component 226 can be associated with (e.g., communicatively connected to) the processing subsystems, including processing subsystem1 202 and processing subsystem2 204.

In some embodiments, the system 200 can comprise a desired number of I/O data concentrator components, including I/O data concentrator component1 228 and I/O data concentrator component2 230, that respectively can communicate with one or more sensor components or other data sources to facilitate providing data communication paths, via the network component 226, for data (e.g., sensor data) to flow between applications and sensor components of or associated with the system 200. receive data (e.g., sensor data) from one or more sensor components or other data sources, process such data, and/or generate messages comprising desired portions of such data. The respective I/O data concentrator components (e.g., 228, 230) can generate messages comprising desired data (e.g., a desired portion of the sensor data) in accordance with a defined message format and/or protocol. The respective I/O data concentrator components (e.g., 228, 230) can facilitate communicating messages, comprising desired data, to a desired destination (e.g., a component of the system 200) via the network component 228.

The system 200 also can comprise a data server 232 that can desirably adapt data traffic between respective applications (e.g., 214, 216, 218, 220, 222, and/or 224, ...) and between another component(s) (e.g., I/O data concentrator component1 228, I/O data concentrator component2 230) and an application(s) to facilitate communication of traffic between respective applications and between another component(s) and an application(s), as more fully described herein. The data server 232 can facilitate enabling portability of applications (e.g., 214, 216, 218, 220, 222, and/or 224, ...) by providing each application with its desired messages in accordance with the message and data formats of the application, as more fully disclosed herein.

The data server 232 can comprise a data management component 234 that can process (e.g., decode, format, translate, and/or convert ...) messages and data to facilitate adapting data traffic between respective applications (e.g., 214, 216, 218, 220, 222, and/or 224, ...) and between another component(s) (e.g., I/O data concentrator component1 228, I/O data concentrator component2 230) and an application(s) to facilitate communication of traffic between respective applications and between another component(s) and an application(s), as more fully described herein. The data server 232 also can include a data store 236 that can be associated with the data management component 234. The data management component 234 can store and maintain a data table in the data store, wherein the data table can comprise respective current data values and/or other relevant data values of respective data parameters, as more fully disclosed herein.

It is to be appreciated and understood that, while the data server 232 is depicted as being a component separate from other components of the system 200, in other embodiments, all or a portion of the data server 232 can be part of one or more other components, such as, for example, the network component 226, an I/O data concentrator component (e.g., 228 or 230), and/or another component of the system 200. Also, it is to be appreciated and understood that, while the system 200 certain respective numbers of respective components (e.g., two processing subsystems, two processor components, two operating system components, six applications, two I/O data concentrator components, one data server, ...), the disclosed subject matter is not so limited, and, with regard to the respective components, the number of a particular type of component employed in the system 200 can more or less than the number of such type of component presented in the system 200 in FIG. 2.

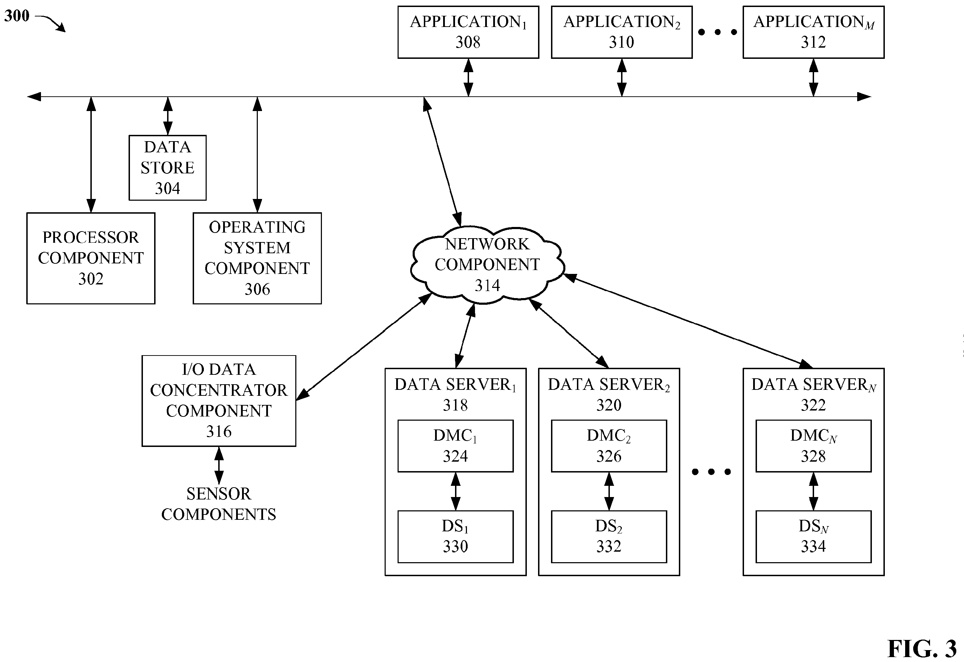

FIG. 3 depicts a block diagram of an example system 300 that can employ multiple data servers that can desirably adapt data traffic between applications and between other components and applications to facilitate application portability and facilitate communication of traffic between respective applications and between the other components and applications, in accordance with one or more embodiments of the disclosed subject matter. The system 300 can comprise a processor component 302, data store 304, and operation system component 306 that can perform respective functions, operations, and/or tasks, as more fully described herein. The system 300 also can include applications, such as application1 308, application2 310, up through applicationM 312, that can perform various respective functions, operations, and/or tasks on (e.g., to process) data or with regard to data, as more fully disclosed herein, wherein M can be virtually any desired number. The system 300 further can comprise a network component 314 that can be associated with (e.g., communicatively connected to) various components (e.g., processor component, applications, I/O data concentrator component(s), ...) of the system 300 to facilitate communication of information between the various components of the system 300.

The system 300 also can include one or more I/O data concentrator components, such as I/O data concentrator component 316, that can receive data (e.g., sensor data or other data) from one or more sensor components, other components, systems, or devices, and/or other data sources, process such data, and/or generate messages comprising desired portions of such data. The I/O data concentrator component 316 can generate messages comprising desired data (e.g., a desired portion of the sensor data or other data) in accordance with a defined message format and/or protocol. The I/O data concentrator component 316 can facilitate communicating messages, comprising desired data, to a desired destination (e.g., component of system 300) via the network component 314.

To facilitate desirably adapting data associated with the system 300, the system 300 can comprise a desired number of data servers, including data server1 318, data server2 320, up through data serverN 322, wherein N can be virtually any desired number. The data servers (e.g., 318, 320, 322, ...) can be the same as or similar to, and/or can comprise the same or similar functionality and features as, data servers more fully described herein. The data servers (e.g., 318, 320, 322, ...) can respectively include data management servers, such as data management server1 324 (DMC1 324), data management server2 326 (DMC2 326), up through data management serverN 328 (DMCN 328). The data management servers (e.g., 324, 326, 328, ...) respectively can facilitate adapting (e.g., formatting, translating, converting, and/or scaling, ...) data associated with the applications or other components (e.g., sensor components, I/O data concentrator components, ...), and facilitate generating and processing (e.g., formatting, and/or encoding, ...) messages, comprising desired data, based at least in part on respective data element characteristics and rate information associated with the respective applications, as more fully described herein. The respective data servers (e.g., 318, 320, 322, ...) also can comprise respective data stores, such as data store1 330 (DS1 330), data store2 332 (DS2 332), up through data storeN 334 (DSN 334), that can store information, including data being communicated between applications or between applications and other components, a data table comprising current data and/or other relevant data, metadata associated with the data, data element characteristics and rate information associated with applications or other components (e.g., I/O data concentrator components), and/or other information.

The data servers (e.g., 318, 320, 322, ...) can have knowledge of the network topology of the network of the system 300 and where respective applications reside in relation to the network and other components in or associated with the network. In some embodiments, the data servers (e.g., 318, 320, 322, ...) can be distributed to respective locations (e.g., physical locations or logical locations) or sections throughout the network to facilitate desirable processing and communication of messages and data in the network. For instance, data server1 318 can be located in a first location or section of the network and can facilitate managing message and data processing and communications associated with applications and other components located in the first section of the network. Data server2 320 can be located in a second location or section of the network and can facilitate managing message and data processing and communications associated with applications and other components located in the second section of the network. Data serverN 322 can be located in a third location or section of the network and can facilitate managing message and data processing and communications associated with applications and other components located in the third section of the network.

As an example, the data management component1 324 of data server1 318 can monitor traffic being communicated in the first section of the network, and can decode messages being communicated from applications or other components (e.g., I/O data concentrator component) located in the first section of the network. The data management component1 324 can store the data recovered from decoding the messages in data storel 330 (e.g., in a data table in data store1 330). In some embodiments, the data management component1 324 also can communicate that data to all or at least a portion of the other data servers (e.g., 320, 322, ...) associated with the network via the network component 314 or via another communication channel (e.g., direct communication channels) between data server1 318 and the other data servers (e.g., 320, 322, ...). Maintaining the data obtained by data server1 318 in all or at least multiple data servers can facilitate data redundancy in the network. By employing data redundancy in the network, if data is lost or corrupted in one data server (e.g., data server1 318), such data can be restored to that data server by another data server (e.g., data server2 320) that also has such data stored in its data store (e.g., data store2 332).

Further, the other data management components (e.g., 326, 328, ...) of the other data servers (e.g., 320, 322, ...) can monitor other traffic being communicated in the other respective sections of the network with which they are associated, and can decode respective messages being communicated from other applications or other components (e.g., another I/O data concentrator component(s)) located in the other respective sections of the network. The other data management components of the other data servers can store respective data recovered from decoding respective messages in their respective data stores and/or can communicate such data to other data servers to facilitate data redundancy in the network.

In certain embodiments, additionally or alternatively, respective portions of the data traffic load in the network can be allocated (e.g., dynamically allocated) among the respective data servers (e.g., 318, 320, 322, ...) based at least in part on the respective locations of the respective data servers in the network in relation to the respective portions of the data traffic, the respective available resources of the respective data servers to process a portion of the data traffic load, and/or other factors. For instance, at a given time, if data server1 318 has significant resources available to process data traffic, and data server2 320 is relatively low on available resources to process data traffic, a larger portion of the data traffic load currently being communicated in the network can be allocated to data server1 318 and a smaller portion of the data traffic load currently being communicated in the network can be allocated to data server2 320.

In some embodiments, to facilitate making allocations of portions of the data traffic load in the network among the data servers, maintaining data redundancy in the network, and/or managing other operations by the data servers, one data server (e.g., data server1 318) of the data servers can be a master data server and the other data servers (e.g., data server2 320, data serverN 322, ...) can be slave data servers relative to the master data server. The master data server (e.g., data server1 318) can know the respective locations of the respective data servers in the network, can obtain information regarding respective resource availability of the respective data servers, can make determinations regarding the allocation of portions of the data traffic load among the data servers (e.g., 318, 320, 322, ...) for processing by the respective data servers based at least in part on the respective resource availability of the respective data servers and/or respective locations of the respective data servers, can facilitate communication of information between the data servers, and/or can control at least a portion of other operations of the slave data servers, in accordance with defined data management criteria.

In other embodiments, the system 300 can have no master data server, and the data servers (e.g., 318, 320, 322, ...) can negotiate with each other to facilitate determining allocations of portions of the data traffic load in the network among the data servers, determining respective resource availability of respective data servers, determining what data to communicate between each other, communicating data between each other (e.g., to facilitate data redundancy in the network), and/or managing other operations that can be performed by the data servers, in accordance with the defined data management criteria.

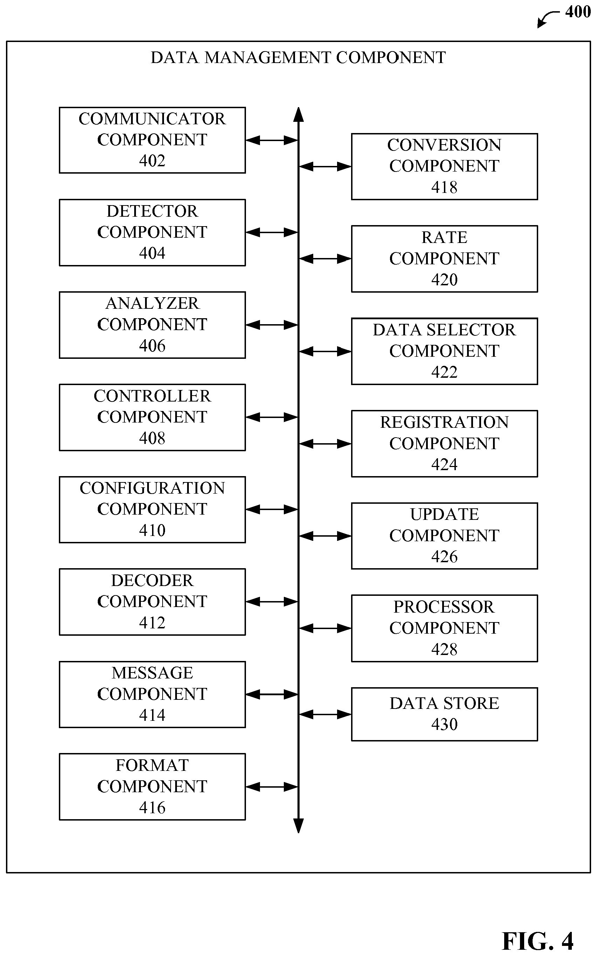

FIG. 4 illustrates a block diagram of an example data management component 400, in accordance with one or more embodiments of the disclosed subject matter. The data management component 400 can be part of or associated with a data server in a system, for example.

The data management component 400 can comprise a communicator component 402 that can communicate data to various components (e.g., applications, I/O data concentrator components, another data server(s)) of the system and/or to external components, systems, or devices, and can receive data from components of the system and/or from external components, systems, or devices. For example, the communicator component 402 can receive or facilitate capture or routing (e.g., to the data server) of messages from applications or other components (e.g., I/O data concentrator components, another data server(s), ...) of or associated with the system. As another example, the communicator component 402 can communicate respective messages, comprising respective data, to respective applications to facilitate communicating desired data to the respective applications.

The data management component 400 also can comprise a detector component 404 that can monitor data traffic being communicated in the network of the system. The detector component 404 can detect and facilitate capture or routing (e.g., to the data server) of messages and associated data being communicated in the network for which message and/or data processing can be desired before sending the message and/or data to the destination (e.g., destination application that desires the data), in accordance with the defined data management criteria and/or respective data element characteristics of the respective applications of the system. For example, an application can communicate a message comprising data. The detector component 404 can monitor the data traffic in the network and can detect the message, which can comprise an item of data that is desired (e.g., wanted or needed) by another application. The detector component 404 can determine that the item of data is desired by the other application, and also can determine that the message and/or item of data are not in proper form (e.g., message is not in a proper format, item of data is not expressed in a proper unit of measurement) with respect to the other application based at least in part on the data element characteristics associated with the other application, in accordance with the defined data management criteria. The detector component 404 can determine that the message, including its data (e.g., the item of data), is to be captured by or routed to the data server for processing (e.g., adapting) by the data server to modify the message and/or item of data to place them in the proper form before communicating the message and/or item of data to the other application.

The data management component 400 can include an analyzer component 406 that can analyze data to facilitate performing various operations of the data management component 400. For example, the analyzer component 406 can analyze data to facilitate determining a format of a message, determining whether the message is to be re-formatted, determining whether a particular item of data is desired by an application and is to be included in a message to the application, determining whether the particular item of data is expressed in the proper unit of measurement associated with the application, if the particular item of data is not expressed in the proper unit of measurement, and/or determining a data conversion or scaling to perform on the particular item of data to express it in the proper unit of measurement, etc.

The data management component 400 further can comprise a controller component 408 that can control operations relating to capturing messages and data, processing messages and data, reformatting messages and data, translating, converting, or scaling data values to express data in a different unit of measurement, determining whether or not an item of data is desired by and is to be sent to an application, allocating resources of the data server to process messages and data in the network, and/or perform other operations. The controller component 408 can facilitate controlling operations being performed by various components of the data management component 400, controlling data flow between various components of the data management component 400, controlling data flow between the data management component 400 and other components (e.g., applications, I/O data concentrator components, ...) or systems associated with the data management component 400, etc.

The data management component 400 can include a configuration component 410 that can receive (e.g., from an application, message, or other data source) respective configuration files of respective applications or other components (e.g., I/O data concentrator components) associated with the system. A configuration file can comprise data element characteristics, rate information, and/or other information relating to the associated application, wherein such information can be utilized by the data management component 400 to facilitate processing messages and/or data associated with the application, in accordance with the defined data management criteria.

The data management component 400 also can comprise a decoder component 412 that can decode a message and/or data in the message, based at least in part on data element characteristics associated with the application or other component that generated the message and/or instructions associated with and sent in connection with the message. The controller component 408, decoder component 412, or another component can facilitate storing the data identified or recovered from the message in a data table, which can maintain current data values and/or other relevant data values.

The data management component 400 can include a message component 414 that can generate messages comprising data that can be sent to applications or other components of the system. For example, the message component 414 can generate a message that can comprise data desired (e.g., wanted or needed) by an application.

The data management component 400 can comprise a format component 416 that can determine whether a message or data is to be re-formatted from a current format to a different format, based at least in part on the current format of the message or data and the data element characteristics relating to message or data format associated with the application or other component that is to receive the message or data. For example, the format component 416 can determine that the message is in a first message format, but the application that is to receive the message utilizes a second message format, based at least in part on the data element characteristics relating to message formatting associated with the application. The format component 416 can therefore determine that the message is to be re-formatted to the second message format. Consequently, the format component 416 can re-format the message to modify the message from the first message format to the second message format, in accordance with the data element characteristic associated with the application.

The data management component 400 can include a conversion component 418 that can convert, modify, or scale a data value expressed in one type of unit of measurement to generate a different data value expressed in a different type of unit of measurement so that the data value is expressed using a unit of measurement that is employed by the application or other component that is to receive the data. For example, the decoder component 412 can decode a message and identify data therein that has a first data value that is expressed in a first unit of measurement. The data can be forwarded to the conversion component 418 or can be stored in the data table, wherein the conversion component 418 can retrieve the data from the data table, in connection with a message being generated to communicate that data to an application that desires such data. The conversion component 418 can determine that the data is expressed in the first unit of measurement. The conversion component 418 also can determine that the application, which is to receive the data, utilizes such data with the data value expressed in a second unit of measurement, based at least in part on data element characteristics relating to units of measurement associated with the application. As a result, the conversion component 418 can determine that the data value of the data in the first unit of measurement is to be converted to a second data value that is expressed in the second unit of measurement. The data having the second data value (e.g., the converted, modified, or scaled data value) can be included in the message that is to be sent to the application.

The data management component 400 also can comprise a rate component 420 that can determine the rate at which data is to be supplied to an application or other component that is to receive such data based at least in part on rate information associated with the application or other receiving component. If the rate component 420 determines that the rate at which the data is generated is different than (e.g., faster than) the rate at which data is to be supplied to the application or other receiving component, the rate component 420 can adjust the rate (e.g., lower the rate, downrate) of supplying the data to the application or other receiving component to the desired rate associated with the application or other receiving component, in accordance with the rate information.

The data management component 400 further can include a data selector component 422 that can facilitate determining what items of data an application or other component desires at a given time and selecting only those items of data desired by the application or other component at the given time for inclusion in a message to the application or other component, without including other data that is not desired (e.g., not wanted or needed) by the application or other component. For example, based at least in part on data element characteristics associated with the application, the data selector component 422 can determine that the application desires a first subset of data at a given time, but does not desire (e.g., does not want or need) a second subset of data at the given time. The data selector component 422 can select only the first subset of data for inclusion in a message to the application at the given time, without selecting the second subset of data or including the second subset of data in the message.

In some embodiments, the data management component 400 can comprise a registration component 424 that can register applications with the data server to facilitate adapting messages or data being communicated between applications or between application and another component. When an application is being introduced into the system, the registration component 424 can register have the application register with the data server. As part of the registration process, the registration component 424 can request and/or receive information identifying the application, data element characteristics and rate information associated with the application, and/or other desired information associated with the application. Information, such as the data element characteristics and rate information associated with the application, can be used by the data management component 400 to facilitate adapting messages and data associated with the application (e.g., adapting messages and data to be sent to the application; or adapting messages and data being sent by the application to another application).

The data management component 400 also can include an update component 426 that can be employed to update information, such as data element characteristics, rate information, and/or other information, associated with an application, if there are changes made to the application. For instance, applications that are developed can be used in the system, and, as desired, in some instances, one or more applications that are still under development can be utilized in the system as well. An application that is under development can be modified over time. Initially, the application can have a first set of data element characteristics, first rate information, and/or a first interface with the network. If the application is modified to have a second set of data element characteristics, second rate information, and/or a second interface with the network, the update component 426 can update the information associated with the application to enable the data management component 400 to manage the application based at least in part on the second set of data element characteristics, second rate information, and/or second interface with the network.

The data management component 400 can comprise a processor component 428 that can work in conjunction with the other components (e.g., communicator component 402, detector component 404, analyzer component 406, ...) to facilitate performing the various functions of the data management component 400. The processor component 428 can employ one or more processors, microprocessors, or controllers that can process data, such as information relating to applications, messages, a data table, message or data formatting, data conversions or scaling, configuration files associated with applications or other components, data element characteristics associated with applications or other components, rates of communication of data to applications or other components, application updates, resources, and/or other information, to facilitate operation of the data management component 400, as more fully disclosed herein, and control data flow between the data management component 400 and other components associated with the data management component 400.

The data management component 400 also can include a data store 430 that can store data structures (e.g., user data, metadata), code structure(s) (e.g., modules, objects, hashes, classes, procedures) or instructions, information relating to applications, messages, a data table, message or data formatting, data conversions or scaling, configuration files associated with applications or other components, data element characteristics associated with applications or other components, rates of communication of data to applications or other components, application updates, resources, and/or other information, to facilitate controlling operations associated with the data management component 400. In an aspect, the processor component 428 can be functionally coupled (e.g., through a memory bus) to the data store 430 in order to store and retrieve information desired to operate and/or confer functionality, at least in part, to communicator component 402, detector component 404, analyzer component 406, etc., and/or substantially any other operational aspects of the data management component 400.

It is to be understood and appreciated that authentication techniques and protocols can be employed to facilitate security of the system, memory, data, applications, data servers, or other components of or associated with the system. An authenticator component can employ authentication protocols to facilitate security of data associated with the system (e.g., IMA system), a memory (e.g., a data store), and/or an application, in accordance with the disclosed subject matter. For example, the authenticator component can solicit authentication data (e.g., an authentication credential) from an entity (e.g., an application, a user, a device), and, upon the authentication data so solicited, can be employed, individually and/or in conjunction with information acquired and ascertained as a result of biometric modalities employed, to facilitate controlling access to the system, memory, data, applications, data servers, or other components of or associated with the system. The authentication data can be in the form of a password (e.g., a sequence of humanly cognizable characters), a pass phrase (e.g., a sequence of alphanumeric characters that can be similar to a typical password but is conventionally of greater length and contains non-humanly cognizable characters in addition to humanly cognizable characters), a pass code (e.g., Personal Identification Number (PIN)), and the like, for example. Additionally and/or alternatively, public key infrastructure (PKI) data can also be employed by the authentication component. PKI arrangements can provide for trusted third parties to vet, and affirm, entity identity through the use of public keys that typically can be certificates issued by the trusted third parties. Such arrangements can enable entities to be authenticated to each other, and to use information in certificates (e.g., public keys) and private keys, session keys, Traffic Encryption Keys (TEKs), cryptographic-system-specific keys, and/or other keys, to encrypt and decrypt messages communicated between entities.

The authenticator component can implement one or more machine-implemented techniques to identify an entity by its unique physical and behavioral characteristics and attributes. Biometric modalities that can be employed can include, for example, finger print identification that can scan the corrugated ridges of skin that are non-continuous and form a pattern that can provide distinguishing features to identify an entity, face recognition wherein measurements of key points on an entity's face can provide a unique pattern that can be associated with the entity, and iris recognition that measures from the outer edge towards the pupil the patterns associated with the colored part of the eye - the iris - to detect unique features associated with an entity's iris.

In response to verifying that the received authentication data matches stored authentication data relating to the entity, the authenticator component can grant a set of access rights to the system, memory, data, applications, data servers, or other components of or associated with the system, in accordance with access rights that the entity is permitted to have. In response to not being able to verify that the received authentication data matches stored authentication data relating to the entity, the authenticator component can deny access rights to the system, memory, data, applications, data servers, or other components, or can grant, to the entity, limited access rights to the system, memory, data, applications, data servers, or other components, wherein the limited access rights can be access rights that are permitted to be granted to non- or un- authorized entities. The authenticator component also can provide an entity with one or more additional opportunities to provide valid authentication data up to a defined maximum number of authentication attempts.

It is also to be understood and appreciated that cryptographic protocols can be employed by the disclosed subject matter to facilitate security of data associated with the system, memory, applications, data servers, or other components of or associated with the system, in accordance with the disclosed subject matter. For example, a cryptographic component (e.g., cryptographic engine) can be employed and can facilitate encrypting and/or decrypting data (e.g., content, content-related information, entity-related information) to facilitate securing data being written to, stored in, and/or read from the memory, and/or data being communicated to or from the system. The cryptographic component can provide symmetric cryptographic tools and accelerators (e.g., Twofish, Blowfish, AES, TDES, IDEA, CAST5, RC4, etc.) to ensure that the system, memory, data, applications, data servers, or other components, or portions thereof, can only be accessed by those entities authorized and/or authenticated to do so. The cryptographic component can also provide asymmetric cryptographic accelerators and tools (e.g., RSA, Digital Signature Standard (DSS), and the like) to ensure that the system, a memory (e.g., a specified partition in the memory), data, applications, data servers, or other components, or portions thereof, only can be accessed by those entities that are authorized and certified to do so. Additionally, the cryptographic component can provide accelerators and tools (e.g., Secure Hash Algorithm (SHA) and its variants such as, for example, SHA-0, SHA-1, SHA-224, SHA-256, SHA-384, and SHA-512) to ensure that access to the system, memory, data, applications, data servers, or other components, or portions thereof, is confined to those entities authorized to gain access.

The aforementioned systems and/or devices have been described with respect to interaction between several components. It should be appreciated that such systems and components can include those components or sub-components specified therein, some of the specified components or sub-components, and/or additional components. Sub-components could also be implemented as components communicatively coupled to other components rather than included within parent components. Further yet, one or more components and/or sub-components may be combined into a single component providing aggregate functionality. The components may also interact with one or more other components not specifically described herein for the sake of brevity, but known by those of skill in the art.

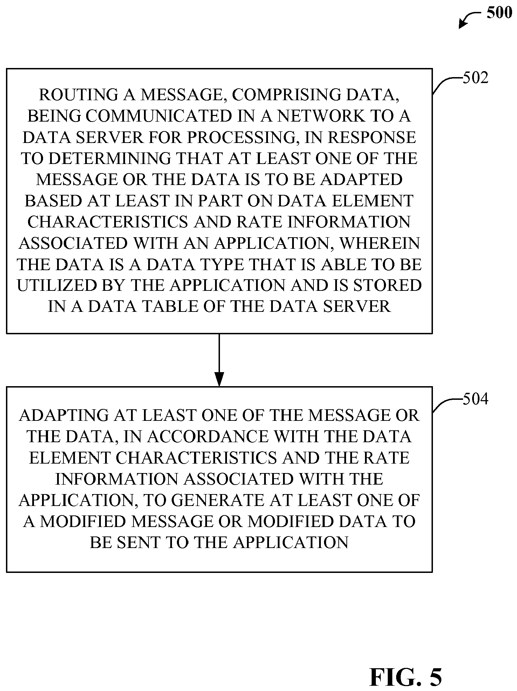

Figures 5-7 illustrate methods and/or flow diagrams in accordance with the disclosed subject matter. For simplicity of explanation, the methods are depicted and described as a series of acts. It is to be understood and appreciated that the disclosed subject matter is not limited by the acts illustrated and/or by the order of acts, for example acts can occur in various orders and/or concurrently, and with other acts not presented and described herein. Furthermore, not all illustrated acts may be required to implement the methods in accordance with the disclosed subject matter. In addition, those skilled in the art will understand and appreciate that the methods could alternatively be represented as a series of interrelated states via a state diagram or events. Additionally, it should be further appreciated that the methods disclosed hereinafter and throughout this specification are capable of being stored on an article of manufacture to facilitate transporting and transferring such methods to computers. The term article of manufacture, as used herein, is intended to encompass a computer program accessible from any computer-readable device or storage media.

Referring to FIG. 5, illustrated is a flow diagram of an example method 500 for desirably adapting data traffic between applications and between other components and applications to facilitate application portability and facilitate communicating traffic between respective applications and between the other components and applications, in accordance with one or more embodiments of the disclosed subject matter. As an example, the method 500 can be employed by a data server, comprising a data management component.

At reference numeral 502, a message, comprising data, being communicated in a network can be routed to a data server for processing, in response to determining that at least one of the message or the data is to be adapted based at least in part on data element characteristics and rate information associated with an application, wherein the data is a data type that is able to be utilized by the application and is stored in a data table of the data server. The data management component can monitor messages being communicated in the network. The data management component can detect the message, comprising the data, being communicated in the network. Based at least in part on data element characteristics and rate information associated with an application, the data management component can determine that the data in the message is a type of data that can be desired (e.g., is able to be utilized; is wanted or needed) by the application, and can determine that at least one of the message or the data is to be adapted. The data management component can store the data in a data table in a data store of the data server, wherein the data and other data can be current data values and/or other relevant data values that can be maintained in the data table.

At reference numeral 504, at least one of the message or the data can be adapted, in accordance with the data element characteristics and the rate information associated with the application, to generate at least one of a modified message or modified data to be sent to the application. The data management component can adapt (e.g., format, convert, scale, translate, ...) at least one of the message or the data, in accordance with the data element characteristics and the rate information associated with the application, to generate at least one of a modified message or modified data to be sent to the application.

For example, if the format(s) (e.g., message format and/or data format) of the message and/or the data being communicated in the network is different from the format(s) that the application utilizes for messages and/or data, the data management component can re-format the message and/or the data to generate a modified message and/or modified data based at least in part on the format(s) that the application utilizes, in accordance with the data element characteristic(s) relating to message and/or data formatting associated with the application. As another example, if the data in the message is expressed in a first unit of measurement that is different from a second unit of measurement that is utilized by the application with regard to that type of data, the data management component can convert or scale the data value, which was expressed in the first unit of measurement, to generate a modified data value expressed in the second unit of measurement.

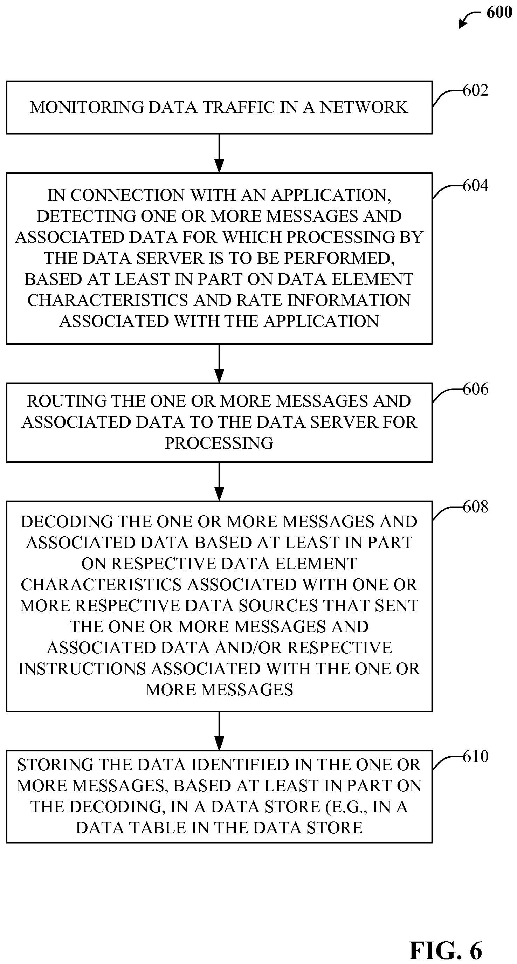

FIG. 6 presents a flow diagram of an example method for decoding messages and associated data to facilitate adapting the messages and associated data, in accordance with one or more embodiments and aspects of the disclosed subject matter. As an example, the method 600 can be employed by a data server, which can comprise a data management component.

At reference numeral 602, data traffic in a network can be monitored. For example, the data management component can monitor data traffic being communicated in a network to facilitate determining whether which portions of the data traffic are to be routed to the data server for processing (e.g., adapting, formatting, converting, scaling, and/or translating, ...).

At reference numeral 604, in connection with an application, one or more messages and associated data for which processing by the data server is to be performed can be detected based at least in part on data element characteristics and rate information associated with the application. In response to the monitoring of the data traffic, the data management component can detect one or more messages and associated data (e.g., respective data in the respective messages) for which processing by the data server is to be performed based at least in part on the data element characteristics and the rate information associated with the application.

At reference numeral 606, the one or more messages and associated data can be routed to the data server for processing. The data management component can route the one or more messages and associated data to the data server for processing.

At reference numeral 608, the one or more messages and associated data can be decoded based at least in part on respective data element characteristics associated with one or more respective data sources that sent the one or more messages and associated data and/or respective instructions associated with the one or more messages. The one or more respective data sources can comprise another application(s), an I/O data concentrator component(s), a sensor component(s), or another component(s) in or associated with the system. The data management component can decode the one or more messages and associated data based at least in part on the respective data element characteristics of the one or more respective data sources and/or the instructions associated with the one or more messages, wherein the instructions can indicate how the message or data is to be treated (e.g., processed), how the message or data is formatted, and/or other characteristics of the message or data.

At reference numeral 610, the data identified in the one or more messages, based at least in part on the decoding, can be stored in a data store (e.g., in a data table in the data store. The data management component can identify one or more items of data in the one or more messages, based at least in part on the results of the decoding of the one or more messages and associated data. The data management component can store the one or more items of data in the data table maintained in the data store. The data in the data table can be current data values and/or other relevant data values associated with the system.

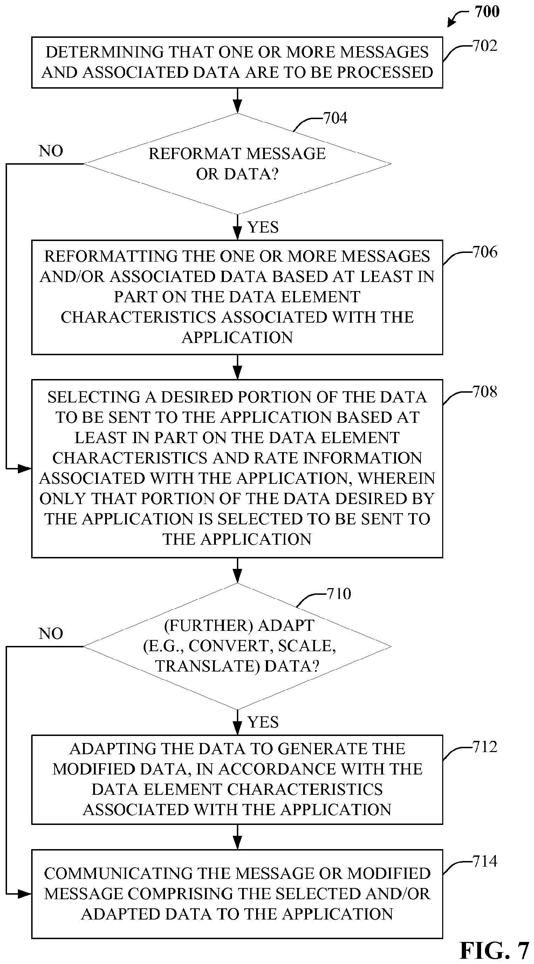

With regard to FIG. 7, depicted is a flow diagram of an example method 700 for adapting messages and data to be sent to an application, in accordance with one or more embodiments of the disclosed subject matter. As an example, the method 600 can be employed by a data server, which can comprise a data management component.

At reference numeral 702, a determination can be made that one or more messages and associated data are to be processed. In connection with an application that desires certain data, the data management component can determine that the one or more message and associated data are to be processed by the data server based at least in part on data element characteristics and/or rate information associated with the application. The data management component can route the one or more messages and associated data to the data server for processing.

At reference numeral 704, a determination can be made regarding whether the one or more messages and associated data are to be reformatted based at least in part on the data element characteristics associated with the application, data element characteristics associated with the data source(s) that sent the one or more messages and associated data, and/or other information. The data management component can determine whether the one or more messages and associated data are to be reformatted based at least in part on the data element characteristics associated with the application, data element characteristics associated with the data source(s) that sent the one or more messages and associated data, and/or other information (e.g., instructions sent with the message(s)). The data management component can decode the one or more messages and associated data, as described herein.

If, at reference numeral 704, it is determined that the one or more messages and associated data are to be reformatted, at reference numeral 706, the one or more messages and/or associated data can be formatted (e.g., re-formatted) based at least in part on the data element characteristics associated with the application. For instance, if a message was sent in a first message format, and the application employs a second message format, the data management component can modify the message to re-format the message to generate a modified message in a second message format, in accordance with the data element characteristics associated with the application. At this point, the method 700 can proceed to reference numeral 708.

Referring back to reference numeral 704, if, at reference numeral 704, it is determined that the one or more messages and associated data are not to be reformatted, the method 700 can proceed to reference numeral 708. If the data management component determines that the one or more messages and associated data do not have to be formatted, for example, because the data management component has determined that the one or more messages and associated data are already properly formatted with respect to the application based at least in part on the data element characteristics associated with the application, the method 700 can proceed to reference numeral 708.

At reference numeral 708, a desired portion of the data can be selected to be sent to the application based at least in part on the data element characteristics and rate information associated with the application, wherein only that portion of the data desired by the application is selected to be sent to the application. The data management component can determine which data (e.g., all or a portion of the data of the one or more messages) is to be selected to be sent to the application based at least in part on the data element characteristics and rate information associated with the application. Based at least in part on the results of the determination, the data management component can select only such data that is desired (e.g., wanted or needed) by the application.

At reference numeral 710, a determination can be made regarding whether data is to be adapted (e.g., converted, scaled, or translated) to generate modified data. The data management component can determine whether any data associated with the one or more messages is to be adapted to generate modified data. For example, the data management component can determine whether an item of data having a first data value expressing the item of data in accordance with a first type of unit of measurement (e.g., feet) to a second (e.g., different) data value expressing in the item of data in accordance with a second type of unit of measurement (e.g., meters), based at least in part on a data element characteristic associated with the application indicating that such item of data is to be expressed in accordance with the second type of unit of measurement. As another example, the data management component can determine whether an item of data expressed in a first language (e.g., English) is to be translated to generate modified data that expresses the item of data in a second language (e.g., German) based at least in part on a data element characteristic associated with the application that indicates that such item of data is to be expressed in the second language.

If, at reference numeral 710, it is determined that data is to be adapted to generate the modified data, at reference numeral 712, the data can be adapted to generate the modified data, in accordance with the data element characteristics associated with the application. If the data management component determines that the data is to be adapted to generate the modified data, the data management component can adapt (e.g., convert, scale, or translate) such data to generate the modified data, in accordance with the data element characteristics associated with the application. At this point, the method 700 can proceed to reference numeral 714.

Referring again to reference numeral 710, if, at reference numeral 710, it is determined that data is not to be adapted (e.g., not to be converted, scaled, or translated), at reference numeral 712, the method 700 can proceed to reference numeral 714.

At reference numeral 714, the message or modified message that can comprise the selected and/or adapted (e.g., converted, scaled, or translated) data can be communicated to the application. The data management component can transmit the message (e.g., having the original message formatting or as re-formatted) to the application. The message (or modified message) can comprise only the portion of the data selected to be sent to the application. Also, the sent data can be data that was adapted (e.g., converted, scaled, or translated) or was not so adapted, in accordance with the method 700.

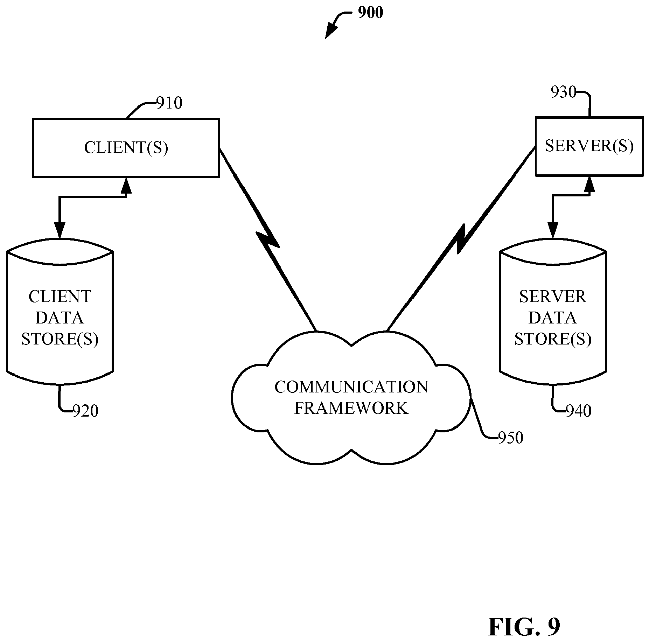

In order to provide a context for the various aspects of the disclosed subject matter, FIGS. 8 and 9 as well as the following discussion are intended to provide a brief, general description of a suitable environment in which the various aspects of the disclosed subject matter may be implemented.

With reference to FIG. 8, a suitable environment 800 for implementing various aspects of this disclosure includes a computer 812. The computer 812 includes a processing unit 814, a system memory 816, and a system bus 818. The system bus 818 couples system components including, but not limited to, the system memory 816 to the processing unit 814. The processing unit 814 can be any of various available processors. Dual microprocessors and other multiprocessor architectures also can be employed as the processing unit 814.

The system bus 818 can be any of several types of bus structure(s) including the memory bus or memory controller, a peripheral bus or external bus, and/or a local bus using any variety of available bus architectures including, but not limited to, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Card Bus, Universal Serial Bus (USB), Advanced Graphics Port (AGP), Personal Computer Memory Card International Association bus (PCMCIA), Firewire (IEEE 1394), and Small Computer Systems Interface (SCSI).

The system memory 816 includes volatile memory 820 and nonvolatile memory 822. The basic input/output system (BIOS), containing the basic routines to transfer information between elements within the computer 812, such as during start-up, is stored in nonvolatile memory 822. By way of illustration, and not limitation, nonvolatile memory 822 can include read only memory (ROM), programmable ROM (PROM), electrically programmable ROM (EPROM), electrically erasable programmable ROM (EEPROM), flash memory, or nonvolatile random access memory (RAM). Volatile memory 820 includes random access memory (RAM), which acts as external cache memory. By way of illustration and not limitation, RAM is available in many forms such as static RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), Rambus dynamic RAM, and ferroelectric RAM (FeRAM).

Computer 812 also includes removable/non-removable, volatile/non-volatile computer storage media. FIG. 8 illustrates, for example, a disk storage 824. Disk storage 824 includes, but is not limited to, devices like a magnetic disk drive, floppy disk drive, tape drive, Jaz drive, Zip drive, LS-100 drive, flash memory card, or memory stick. The disk storage 824 also can include storage media separately or in combination with other storage media including, but not limited to, an optical disk drive such as a compact disk ROM device (CD-ROM), CD recordable drive (CD-R Drive), CD rewritable drive (CD-RW Drive) or a digital versatile disk ROM drive (DVD-ROM). To facilitate connection of the disk storage devices 824 to the system bus 818, a removable or non-removable interface is typically used, such as interface 826.

FIG. 8 also depicts software that acts as an intermediary between users and the basic computer resources described in the suitable operating environment 800. Such software includes, for example, an operating system 828. Operating system 828, which can be stored on disk storage 824, acts to control and allocate resources of the computer system 812. System applications 830 take advantage of the management of resources by operating system 828 through program modules 832 and program data 834, e.g., stored either in system memory 816 or on disk storage 824. It is to be appreciated that this disclosure can be implemented with various operating systems or combinations of operating systems.

A user enters commands or information into the computer 812 through input device(s) 836. Input devices 836 include, but are not limited to, a pointing device such as a mouse, trackball, stylus, touch pad, keyboard, microphone, joystick, game pad, satellite dish, scanner, TV tuner card, digital camera, digital video camera, web camera, and the like. These and other input devices connect to the processing unit 814 through the system bus 818 via interface port(s) 838. Interface port(s) 838 include, for example, a serial port, a parallel port, a game port, and a universal serial bus (USB). Output device(s) 840 use some of the same type of ports as input device(s) 836. Thus, for example, a USB port may be used to provide input to computer 812, and to output information from computer 812 to an output device 840. Output adapter 842 is provided to illustrate that there are some output devices 840 like monitors, speakers, and printers, among other output devices 840, which require special adapters. The output adapters 842 include, by way of illustration and not limitation, video and sound cards that provide a means of connection between the output device 840 and the system bus 818. It should be noted that other devices and/or systems of devices provide both input and output capabilities such as remote computer(s) 844.

Computer 812 can operate in a networked environment using logical connections to one or more remote computers, such as remote computer(s) 844. The remote computer(s) 844 can be a personal computer, a server, a router, a network PC, a workstation, a microprocessor based appliance, a peer device or other common network node and the like, and typically includes many or all of the elements described relative to computer 812. For purposes of brevity, only a memory storage device 846 is illustrated with remote computer(s) 844. Remote computer(s) 844 is logically connected to computer 812 through a network interface 848 and then physically connected via communication connection 850. Network interface 848 encompasses wire and/or wireless communication networks such as local-area networks (LAN), wide-area networks (WAN), cellular networks, etc. LAN technologies include Fiber Distributed Data Interface (FDDI), Copper Distributed Data Interface (CDDI), Ethernet, Token Ring and the like. WAN technologies include, but are not limited to, point-to-point links, circuit switching networks like Integrated Services Digital Networks (ISDN) and variations thereon, packet switching networks, and Digital Subscriber Lines (DSL).

Communication connection(s) 850 refers to the hardware/software employed to connect the network interface 848 to the bus 818. While communication connection 850 is shown for illustrative clarity inside computer 812, it can also be external to computer 812. The hardware/software necessary for connection to the network interface 848 includes, for exemplary purposes only, internal and external technologies such as, modems including regular telephone grade modems, cable modems and DSL modems, ISDN adapters, and Ethernet cards.

FIG. 9 is a schematic block diagram of a sample-computing environment 900 with which the subject matter of this disclosure can interact. The system 900 includes one or more client(s) 910. The client(s) 910 can be hardware and/or software (e.g., threads, processes, computing devices). The system 900 also includes one or more server(s) 930. Thus, system 900 can correspond to a two-tier client server model or a multi-tier model (e.g., client, middle tier server, data server), amongst other models. The server(s) 930 can also be hardware and/or software (e.g., threads, processes, computing devices). The servers 930 can house threads to perform transformations by employing this disclosure, for example. One possible communication between a client 910 and a server 930 may be in the form of a data packet transmitted between two or more computer processes.

The system 900 includes a communication framework 950 that can be employed to facilitate communications between the client(s) 910 and the server(s) 930. The client(s) 910 are operatively connected to one or more client data store(s) 920 that can be employed to store information local to the client(s) 910. Similarly, the server(s) 930 are operatively connected to one or more server data store(s) 940 that can be employed to store information local to the servers 930.

It is to be noted that aspects or features of this disclosure can be exploited in substantially any wireless telecommunication or radio technology, e.g., Wi-Fi; Bluetooth; Worldwide Interoperability for Microwave Access (WiMAX); Enhanced General Packet Radio Service (Enhanced GPRS); Third Generation Partnership Project (3GPP) Long Term Evolution (LTE); Third Generation Partnership Project 2 (3GPP2) Ultra Mobile Broadband (UMB); 3GPP Universal Mobile Telecommunication System (UMTS); High Speed Packet Access (HSPA); High Speed Downlink Packet Access (HSDPA); High Speed Uplink Packet Access (HSUPA); GSM (Global System for Mobile Communications) EDGE (Enhanced Data Rates for GSM Evolution) Radio Access Network (GERAN); UMTS Terrestrial Radio Access Network (UTRAN); LTE Advanced (LTE-A); etc. Additionally, some or all of the aspects described herein can be exploited in legacy telecommunication technologies, e.g., GSM. In addition, mobile as well non-mobile networks (e.g., the Internet, data service network such as internet protocol television (IPTV), etc.) can exploit aspects or features described herein.

While the subject matter has been described above in the general context of computer-executable instructions of a computer program that runs on a computer and/or computers, those skilled in the art will recognize that this disclosure also can or may be implemented in combination with other program modules. Generally, program modules include routines, programs, components, data structures, etc. that perform particular tasks and/or implement particular abstract data types. Moreover, those skilled in the art will appreciate that the inventive methods may be practiced with other computer system configurations, including single-processor or multiprocessor computer systems, mini-computing devices, mainframe computers, as well as personal computers, hand-held computing devices (e.g., PDA, phone), microprocessor-based or programmable consumer or industrial electronics, and the like. The illustrated aspects may also be practiced in distributed computing environments where tasks are performed by remote processing devices that are linked through a communications network. However, some, if not all aspects of this disclosure can be practiced on stand-alone computers. In a distributed computing environment, program modules may be located in both local and remote memory storage devices.

As used in this application, the terms "component," "system," "platform," "interface," and the like, can refer to and/or can include a computer-related entity or an entity related to an operational machine with one or more specific functionalities. The entities disclosed herein can be either hardware, a combination of hardware and software, software, or software in execution. For example, a component may be, but is not limited to being, a process running on a processor, a processor, an object, an executable, a thread of execution, a program, and/or a computer. By way of illustration, both an application running on a server and the server can be a component. One or more components may reside within a process and/or thread of execution and a component may be localized on one computer and/or distributed between two or more computers.

In another example, respective components can execute from various computer readable media having various data structures stored thereon. The components may communicate via local and/or remote processes such as in accordance with a signal having one or more data packets (e.g., data from one component interacting with another component in a local system, distributed system, and/or across a network such as the Internet with other systems via the signal). As another example, a component can be an apparatus with specific functionality provided by mechanical parts operated by electric or electronic circuitry, which is operated by a software or firmware application executed by a processor. In such a case, the processor can be internal or external to the apparatus and can execute at least a part of the software or firmware application. As yet another example, a component can be an apparatus that provides specific functionality through electronic components without mechanical parts, wherein the electronic components can include a processor or other means to execute software or firmware that confers at least in part the functionality of the electronic components. In an aspect, a component can emulate an electronic component via a virtual machine, e.g., within a cloud computing system.

In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in the subject specification and annexed drawings should generally be construed to mean "one or more" unless specified otherwise or clear from context to be directed to a singular form.

As used herein, the terms "example" and/or "exemplary" are utilized to mean serving as an example, instance, or illustration. For the avoidance of doubt, the subject matter disclosed herein is not limited by such examples. In addition, any aspect or design described herein as an "example" and/or "exemplary" is not necessarily to be construed as preferred or advantageous over other aspects or designs, nor is it meant to preclude equivalent exemplary structures and techniques known to those of ordinary skill in the art.

Various aspects or features described herein can be implemented as a method, apparatus, system, or article of manufacture using standard programming or engineering techniques. In addition, various aspects or features disclosed in this disclosure can be realized through program modules that implement at least one or more of the methods disclosed herein, the program modules being stored in a memory and executed by at least a processor. Other combinations of hardware and software or hardware and firmware can enable or implement aspects described herein, including a disclosed method(s). The term "article of manufacture" as used herein can encompass a computer program accessible from any computer-readable device, carrier, or storage media. For example, computer readable storage media can include but are not limited to magnetic storage devices (e.g., hard disk, floppy disk, magnetic strips...), optical discs (e.g., compact disc (CD), digital versatile disc (DVD), blu-ray disc (BD) ...), smart cards, and flash memory devices (e.g., card, stick, key drive...), or the like.

As it is employed in the subject specification, the term "processor" can refer to substantially any computing processing unit or device comprising, but not limited to, single-core processors; single-processors with software multithread execution capability; multi-core processors; multi-core processors with software multithread execution capability; multi-core processors with hardware multithread technology; parallel platforms; and parallel platforms with distributed shared memory. Additionally, a processor can refer to an integrated circuit, an application specific integrated circuit (ASIC), a digital signal processor (DSP), a field programmable gate array (FPGA), a programmable logic controller (PLC), a complex programmable logic device (CPLD), a discrete gate or transistor logic, discrete hardware components, or any combination thereof designed to perform the functions described herein. Further, processors can exploit nano-scale architectures such as, but not limited to, molecular and quantum-dot based transistors, switches and gates, in order to optimize space usage or enhance performance of user equipment. A processor may also be implemented as a combination of computing processing units.

In this disclosure, terms such as "store," "storage," "data store," data storage," "database," and substantially any other information storage component relevant to operation and functionality of a component are utilized to refer to "memory components," entities embodied in a "memory," or components comprising a memory. It is to be appreciated that memory and/or memory components described herein can be either volatile memory or nonvolatile memory, or can include both volatile and nonvolatile memory.

By way of illustration, and not limitation, nonvolatile memory can include read only memory (ROM), programmable ROM (PROM), electrically programmable ROM (EPROM), electrically erasable ROM (EEPROM), flash memory, or nonvolatile random access memory (RAM) (e.g., ferroelectric RAM (FeRAM)). Volatile memory can include RAM, which can act as external cache memory, for example. By way of illustration and not limitation, RAM is available in many forms such as synchronous RAM (SRAM), dynamic RAM (DRAM), synchronous DRAM (SDRAM), double data rate SDRAM (DDR SDRAM), enhanced SDRAM (ESDRAM), Synchlink DRAM (SLDRAM), direct Rambus RAM (DRRAM), direct Rambus dynamic RAM (DRDRAM), and Rambus dynamic RAM (RDRAM). Additionally, the disclosed memory components of systems or methods herein are intended to include, without being limited to including, these and any other suitable types of memory.

It is to be appreciated and understood that components, as described with regard to a particular system or method, can include the same or similar functionality as respective components (e.g., respectively named components or similarly named components) as described with regard to other systems or methods disclosed herein.

What has been described above includes examples of systems and methods that provide advantages of this disclosure. It is, of course, not possible to describe every conceivable combination of components or methods for purposes of describing this disclosure, but one of ordinary skill in the art may recognize that many further combinations and permutations of this disclosure are possible. Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim.

Various aspects and embodiments of the present invention are defined by the following numbered clauses:
1. A method, comprising:
   routing, by a system comprising a processor, a message, comprising data, being communicated in a network to a data server for processing, in response to determining that at least one of the message or the data is to be adapted based at least in part on data element characteristics and rate information associated with an application, wherein the data is a data type that is able to be utilized by the application and is maintained in a data table of the data server; and
   adapting, by the system, at least one of the message or the data, in accordance with the data element characteristics and the rate information associated with the application, to generate at least one of a modified message or modified data to be sent to the application.
2. The method of clause 1, further comprising:
   receiving, by the system, respective data element characteristics and respective rate information associated with respective applications from the respective applications or a data source, wherein the respective data element characteristics comprise the data element characteristics associated with the application, and wherein the respective rate information comprises the rate information associated with the application.
3. The method of any preceding clause, further comprising:
   monitoring, by the system, data traffic being communicated in the network; and in response to the monitoring, detecting, by the system, the message, comprising the data, in the data traffic, wherein the determining that at least one of the message or the data is to be adapted is facilitated by the detecting.
4. The method of any preceding clause, further comprising:
   decoding, by the system, the message, comprising the data, based at least in part on a format associated with the message, wherein the format is determined based at least in part on particular data element characteristics associated with at least one of a source application or a source component that employ the format and facilitated the communication of the message via the network.
5. The method of any preceding clause, wherein the source component comprises a sensor that generates at least one of the message or the data, or a data concentrator that generates the message comprising the data.
6. The method of any preceding clause, further comprising:
   determining, by the system, that at least one of the message is in a first message format or the data is in a first data format, wherein, in accordance with the data element characteristics associated with the application, the adapting comprises at least one of reformatting the message to generate the modified message, based at least in part on a second message format associated with the application, or reformatting the data to generate the modified data, based at least in part on a second data format associated with the application.
7. The method of any preceding clause, further comprising:
   determining, by the system, that the data comprises a first data value that is expressed in a first unit of measurement, wherein the adapting comprises scaling the first data value to generate the modified data comprising a second data value expressed in a second unit of measurement, based at least in part on the data element characteristics associated with the application, and wherein the data element characteristics indicate that, with respect to the data, the second unit of measurement is compatible with the application.
8. The method of any preceding clause, further comprising:
   determining, by the system, that the data is expressed in a first language, wherein the adapting comprises translating the data to generate the modified data expressed in a second language, based at least in part on the data element characteristics associated with the application, and wherein the data element characteristics indicate that, with respect to the data, the second language is compatible with the application.
9. The method of any preceding clause, wherein the routing comprises routing messages comprising respective items of data to the data server, wherein the messages comprise the message and the respective items of data comprise the data, and wherein the method further comprises:
   storing, by the system, the respective items of data in the data table of the data server to facilitate maintaining information determined to be relevant, in accordance with defined data management criteria.
10. The method of any preceding clause, further comprising:
   analyzing, by the system, the respective items of data stored in the data table and the data element characteristics and the rate information associated with the application;
   determining, by the system, a subset of the respective items of data that is usable by the application, based at least in part on a result of the analyzing, wherein the adapting comprises adapting at least a portion of the subset of the respective items of data comprising the first item of data; and
   communicating, by the system, the modified message, comprising at least the portion of the subset of the respective items of data, to the application via the network, without communicating another subset of the respective items of data that are not usable by the application.
11. The method of any preceding clause, wherein the respective items of data comprise a first item of data that is the data associated with the message and a second item of data, wherein the first item of data is associated with a first data source that communicated the message in the network, and wherein the second item of data is associated with a second data source that communicated a second message, comprising the second item of data, in the network, and wherein the method further comprises:
   analyzing, by the system, the respective items of data stored in the data table and the data element characteristics and the rate information associated with the application;
   based at least in part on a result of the analyzing, determining, by the system, that the first item of data associated with the first data source and the second item of data associated with the second data source are usable by the application, based at least in part on a result of the analyzing, wherein the adapting comprises adapting at least the first item of data to generate the modified data; and
   communicating, by the system, the modified message, comprising the modified data and the second item of data, to the application via the network.
12. The method of any preceding clause, wherein the first data source is one of a first application, a first data concentrator, or a first sensor, and wherein the second data source is one of a second application, a second data concentrator, or a second sensor.
13. A system, comprising:
   a memory that stores computer-executable components; and
   a processor that executes computer-executable components stored in the memory, wherein the computer executable-components comprise:
      a data server that monitors data traffic communicated in a network in connection with applications associated with the network; and
      a data management component that directs a message, comprising data, being communicated as part of the data traffic in the network to the data server for processing, in response to the monitoring of the data traffic and a determination that at least one of the message or the data is to be adapted based at least in part on data element characteristics and rate information associated with an application of the applications, wherein the data is a data type that is able to be utilized by the application and is maintained in a data table of the data server, and
   wherein the data management component adapts at least one of the message or the data, in accordance with the data element characteristics and the rate information associated with the application, to generate at least one of a modified message or modified data to be sent to the application via a network component of the network.
14. The system of any preceding clause, wherein the data management component adapts at least one of the message or the data comprises the data management component at least one of formats the message, translates the message, formats the data, converts the data, scales the data, or translates the data.
15. The system of any preceding clause, wherein, to facilitate the adapting of the data, the data management component downrates the data from a first rate to a second rate that is compatible with the application, based at least in part on the data element characteristics and the rate information associated with the application.
16. The system of any preceding clause, wherein the application is under development while being utilized in the system, and wherein, in response to update information associated with the application that is received by the data server, the data management component updates at least one of the data element characteristics, the rate information, or an interface associated with the application to facilitate isolating the application under development from another application of the system and facilitate adapting, by the data management component, at least a portion of the data traffic produced by the application for use by the other application, based at least in part on the update information, without modification of the other application associated with the system.
17. The system of any preceding clause, wherein the computer-executable components further comprise a plurality of data servers distributed throughout the network, wherein respective data servers of the plurality of data servers comprise respective data management components that include the data management component, wherein respective portions of the data traffic communicated in the network are allocated for monitoring or processing among the respective data servers, and wherein at least a data portion stored in the data table of the data server is stored in at least one other data server of the plurality of data servers to facilitate data redundancy in the system.
18. The system of any preceding clause, wherein the data server and the data management component are configured to be compatible to interact with the application to facilitate portability of the application to enable compatibility and use of the application with respective data servers comprising respective data management components, and wherein the respective data servers comprise the data server.
19. A machine-readable medium, comprising executable instructions that, when executed by a processor, facilitate performance of operations, comprising:
   routing a message, comprising data, communicated in a network to a data server for processing, in response to determining that at least one of the message or the data is to be modified based at least in part on data element characteristics and rate information associated with an application, wherein the data is a data type that is usable by the application and is maintained in a data table of the data server subsequent to receipt by the data server; and
   modifying at least one of the message or the data, in accordance with the data element characteristics and the rate information associated with the application, to generate at least one of a modified message or modified data to be sent to the application.
20. The machine-readable medium of any preceding clause, wherein the modifying at least one of the message or the data comprises at least one of formatting the message, translating the message, formatting the data, converting the data, scaling the data, or translating the data.

## Claims

1. A method, comprising:
routing, by a system (100) comprising a processor (102), a message, comprising data, being communicated in a network to a data server (118) for processing, in response to determining that at least one of the message or the data is to be adapted based at least in part on data element characteristics and rate information associated with an application (108), wherein the data is a data type that is able to be utilized by the application (108) and is maintained in a data table (124) of the data server (118); and
adapting, by the system (100), at least one of the message or the data, in accordance with the data element characteristics and the rate information associated with the application (108), to generate at least one of a modified message or modified data to be sent to the application (108).

2. The method of claim 1, further comprising:
receiving, by the system (100), respective data element characteristics and respective rate information associated with respective applications (108, 110, 112) from the respective applications (108, 110, 112) or a data source, wherein the respective data element characteristics comprise the data element characteristics associated with the application (108), and wherein the respective rate information comprises the rate information associated with the application (108).

3. The method of either of claim 1 or 2, further comprising:
monitoring, by the system (100), data traffic being communicated in the network; and
in response to the monitoring, detecting, by the system (100), the message, comprising the data, in the data traffic, wherein the determining that at least one of the message or the data is to be adapted is facilitated by the detecting.

4. The method of any preceding claim, further comprising:
decoding, by the system (100), the message, comprising the data, based at least in part on a format associated with the message, wherein the format is determined based at least in part on particular data element characteristics associated with at least one of a source application or a source component that employ the format and facilitated the communication of the message via the network.

5. The method of any preceding claim, further comprising:
determining, by the system (100), that at least one of the message is in a first message format or the data is in a first data format, wherein, in accordance with the data element characteristics associated with the application (108), the adapting comprises at least one of reformatting the message to generate the modified message, based at least in part on a second message format associated with the application (108), or reformatting the data to generate the modified data, based at least in part on a second data format associated with the application (108).

6. The method of any preceding claim, further comprising:
determining, by the system (100), that the data comprises a first data value that is expressed in a first unit of measurement, wherein the adapting comprises scaling the first data value to generate the modified data comprising a second data value expressed in a second unit of measurement, based at least in part on the data element characteristics associated with the application (108), and wherein the data element characteristics indicate that, with respect to the data, the second unit of measurement is compatible with the application (108).

7. The method of any preceding claim, further comprising:
determining, by the system (100), that the data is expressed in a first language, wherein the adapting comprises translating the data to generate the modified data expressed in a second language, based at least in part on the data element characteristics associated with the application (108), and wherein the data element characteristics indicate that, with respect to the data, the second language is compatible with the application (108).

8. The method of any preceding claim, wherein the routing comprises routing messages comprising respective items of data to the data server (118), wherein the messages comprise the message and the respective items of data comprise the data, and wherein the method further comprises:
storing, by the system (100), the respective items of data in the data table (124) of the data server (118) to facilitate maintaining information determined to be relevant, in accordance with defined data management criteria.

9. The method of claim 8, further comprising:
analyzing, by the system (100), the respective items of data stored in the data table and the data element characteristics and the rate information associated with the application (108);
determining, by the system (100), a subset of the respective items of data that is usable by the application (108), based at least in part on a result of the analyzing, wherein the adapting comprises adapting at least a portion of the subset of the respective items of data comprising the first item of data; and
communicating, by the system (100), the modified message, comprising at least the portion of the subset of the respective items of data, to the application (108) via the network, without communicating another subset of the respective items of data that are not usable by the application (108).

10. The method of either of claim 8 or 9, wherein the respective items of data comprise a first item of data that is the data associated with the message and a second item of data, wherein the first item of data is associated with a first data source that communicated the message in the network, and wherein the second item of data is associated with a second data source that communicated a second message, comprising the second item of data, in the network, and wherein the method further comprises:
analyzing, by the system (100), the respective items of data stored in the data table and the data element characteristics and the rate information associated with the application (108);
based at least in part on a result of the analyzing, determining, by the system (100), that the first item of data associated with the first data source and the second item of data associated with the second data source are usable by the application (108), based at least in part on a result of the analyzing, wherein the adapting comprises adapting at least the first item of data to generate the modified data; and
communicating, by the system (100), the modified message, comprising the modified data and the second item of data, to the application (108) via the network.

11. A system (100), comprising:
a memory (816) that stores computer-executable components; and
a processor (814) that executes computer-executable components stored in the memory, wherein the computer executable-components comprise:
a data server (118) that monitors data traffic communicated in a network in connection with applications associated with the network; and
a data management component (120) that directs a message, comprising data, being communicated as part of the data traffic in the network to the data server (118) for processing, in response to the monitoring of the data traffic and a determination that at least one of the message or the data is to be adapted based at least in part on data element characteristics and rate information associated with an application (108) of the applications (108, 110, 112), wherein the data is a data type that is able to be utilized by the application (108) and is maintained in a data table (124) of the data server (118), and
wherein the data management component (120) adapts at least one of the message or the data, in accordance with the data element characteristics and the rate information associated with the application (108), to generate at least one of a modified message or modified data to be sent to the application (108) via a network component (114) of the network.

12. The system of claim 11, wherein the data management component (120) adapts at least one of the message or the data comprises the data management component (120) at least one of formats the message, translates the message, formats the data, converts the data, scales the data, or translates the data.

13. The system of either of claim 11 or 12, wherein, to facilitate the adapting of the data, the data management component (120) downrates the data from a first rate to a second rate that is compatible with the application (108), based at least in part on the data element characteristics and the rate information associated with the application (108).

14. The system of any of claims 11 to 13, wherein the application (108) is under development while being utilized in the system, and wherein, in response to update information associated with the application (108) that is received by the data server (118), the data management component (120) updates at least one of the data element characteristics, the rate information, or an interface associated with the application (108) to facilitate isolating the application (108) under development from another application (110) of the system (100) and facilitate adapting, by the data management component (120), at least a portion of the data traffic produced by the application (108) for use by the other application (110), based at least in part on the update information, without modification of the other application (110) associated with the system (100).

15. The system of any of claims 11 to 14, wherein the computer-executable components further comprise a plurality of data servers (118, 320, 322) distributed throughout the network, wherein respective data servers of the plurality of data servers (118, 320, 322) comprise respective data management components (120, 326, 328) that include the data management component (120), wherein respective portions of the data traffic communicated in the network are allocated for monitoring or processing among the respective data servers (118, 320, 322), and wherein at least a data portion stored in the data table (124) of the data server (118) is stored in at least one other data server of the plurality of data servers (118, 320, 322) to facilitate data redundancy in the system (100).
